# EUROPEAN PATENT APPLICATION

(11) **EP 4 503 725 A1**
(43) Date of publication of application: **05.02.2025**
(21) Application number: 23777944.2
(22) Date of filing: 22.03.2023
(51) Int. Cl.: H04W 28/08

(54) **INFORMATION PROCESSING METHOD, APPARATUS, AND DEVICE**

(30) Priority: 28.03.2022 CN 202210314459
(71) Applicant: Datang Mobile Communications Equipment Co., Ltd., Beijing 100085 (CN)
(72) Inventor: TAO, Yuan, Beijing 100085 (CN)
(74) Representative: Maiwald GmbH
(86) International application number: PCT/CN2023/083034
(87) International publication number: WO 2023/185573

(57) **Abstract**

An information processing method, device, and apparatus are provided. The information processing method includes: determining a first dynamic UE group based on grouping information; configuring a handling rule for a User Plane Function (UPF) device or an Edge Application Server Discovery Function (EASDF) device based on the first dynamic UE group; wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group.

## Description

### CROSS-REFERENCE TO RELATED APPLICATION

The present application claims a priority to the Chinese patent application No. 202210314459.3 filed in China on March 28, 2022, a disclosure of which is incorporated herein by reference in its entirety.

### TECHNICAL FIELD

The present application relates to the field of communication technology, and in particular, to an information processing method, an information processing apparatus, and a device.

### BACKGROUND

In related art, for a non-predefined User Equipment (UE) group using a same edge service, an Application Function (AF) cannot request a change in traffic routing, and for an application with a low latency requirement, it is impossible to request to select the IP range of a common Edge Application Server (EAS). Additionally, a current Session Management Function (SMF) only creates a Domain Name System (DNS) message handling rule for one Protocol Data Unit (PDU) session, and cannot create the DNS message handling rule for the PDU session of a dynamic UE group associated with the same application, which leads to an inability to reduce interaction latency at the application server end.

From the above, it can be seen that the information processing solution for the non-predefined UE group (i.e., a dynamic UE group) in related art has defects such as the inability to reduce interaction latency and the inability to enable traffic steering.

### SUMMARY

An object of the present application is to provide an information processing method, apparatus and device to solve the problems in related art where the information processing solution for a non-predefined UE group (i.e., a dynamic UE group) cannot reduce interaction delay and cannot enable traffic steering.

To solve the above technical problems, an embodiment of the present application provides an information processing method performed by a Session Management Function (SMF) device, including:
determining a first dynamic UE group based on grouping information;
configuring a handling rule for a User Plane Function (UPF) device or an Edge Application Server Discovery Function (EASDF) device based on the first dynamic UE group;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group.

Optionally, the grouping information includes at least one of the followings:
location information of the UE;
application information associated with the UE;
first time period information; or
group identifier associated with the UE.

Optionally, the handling rule indicates at least one of the followings:
common Edge Application Server (EAS) address set information;
common Domain Name System (DNS) server address information;
common Extended DNS (EDNS) client subnet option indication information; or
common Data Network Access Identifier (DNAI) information;
common Local Data Network (L-DN) information; or
a traffic steering rule.

Optionally, determining the first dynamic UE group based on the grouping information includes:
determining the grouping information based on grouping trigger information;
determining the first dynamic UE group based on the grouping information.

Optionally, the grouping trigger information includes at least one of the followings:
local policy information; or
Policy and Charging Control (PCC) policy information provided by a Policy Control Function (PCF) device.

Optionally, the grouping trigger information includes at least one of: indication information or the grouping information;
wherein the indication information is used to instruct the SMF device to configure the handling rule for the UPF device or the EASDF device based on the first dynamic UE group.

Optionally, configuring the handling rule for the UPF device or the EASDF device based on the first dynamic UE group includes:
in the case it is determined that the UPF or EAS address corresponding to at least one UE in the first dynamic UE group needs to be replaced, configuring the handling rule for the UPF device or the EASDF device based on the first dynamic UE group.

Optionally, configuring the handling rule for the UPF device or the EASDF device based on the first dynamic UE group includes:
generating a corresponding DNS message handling rule for the first dynamic UE group;
sending the DNS message handling rule to the EASDF device;
wherein the DNS message handling rule is used to indicate: for at least one UE in the first dynamic UE group, a DNS query message initiated by the at least one UE is sent to a common local DNS server or target indication information is added through the EDNS client subnet option;
the target indication information is used to indicate a target Internet Protocol (IP) range.

Optionally, configuring the handling rule for the UPF device or the EASDF device based on the first dynamic UE group further includes:
obtaining at least one Fully Qualified Domain Name (FQDN);
updating the first dynamic UE group based on the at least one FQDN;
updating the DNS message handling rule for an updated first dynamic UE group;
sending an updated DNS message handling rule to the EASDF device.

Optionally, configuring the handling rule for the UPF device or the EASDF device based on the first dynamic UE group includes:
configuring the handling rule for the UPF device or the EASDF device based on first information of at least one UE in the first dynamic UE group;
wherein the first information includes at least one of the followings:
   EAS information; or
   Protocol Data Unit (PDU) session information.

Optionally, the handling rule further indicates: valid time information of the handling rule itself.

Optionally, after configuring the handling rule for the UPF device or the EASDF device based on the first dynamic UE group, the information processing method further includes:
performing at least one of the following operations based on the handling rule:
performing selection and/or insertion of at least one of an Uplink Classifier (UL CL) or Branching Point (BP), or a PDU session anchor UPF; or
determining a DNS server.

Optionally, after configuring the handling rule for the UPF device or the EASDF device based on the first dynamic UE group, the information processing method further includes:
configuring a traffic routing rule to the UL CL or BP based on the handling rule;
wherein the traffic routing rule indicates that the UL CL is configured with common DNS server address, or the BP is configured with a same IP address prefix.

An embodiment of the present application also provides an information processing method performed by an Edge Application Server Discovery Function (EASDF) device, including:
receiving a handling rule sent by a Session Management Function (SMF) device;
processing a Domain Name System (DNS) query message based on the handling rule;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the handling rule is a rule configured for a User Plane Function (UPF) device or an EASDF device;
the first dynamic UE group is a UE group determined by the SMF device based on grouping information.

Optionally, the grouping information includes at least one of the followings:
location information of the UE;
application information associated with the UE;
first time period information; or
group identifier associated with the UE.

Optionally, receiving the handling rule sent by the SMF device includes:
receiving a DNS message handling rule sent by the SMF device;
wherein the DNS message handling rule is used to indicate: for at least one UE in the first dynamic UE group, a DNS query message initiated by the at least one UE is sent to a common local DNS server or target indication information is added through an Extended DNS (EDNS) client subnet option;
the target indication information is used to indicate a target Internet Protocol (IP) range.

Optionally, receiving the handling rule sent by the SMF device further includes:
receiving an updated DNS message handling rule sent by the SMF device.

Optionally, the handling rule indicates at least one of the followings:
common EAS address set information;
common DNS server address information;
common EDNS client subnet option indication information;
common DNAI information;
common L-DN information; or
a traffic steering rule.

Optionally, after receiving the handling rule sent by the SMF device, the information processing method further includes:
determining valid time of the handling rule;
when the handling rule is within the valid time, sending EAS information to at least one UE in the first dynamic UE group based on the handling rule;
when the handling rule exceeds the valid time, sending a DNS query message corresponding to at least one UE in the first dynamic UE group to the DNS server;
receiving the EAS information fed back by the DNS server, and sending the EAS information to at least one UE in the first dynamic UE group.

Optionally, determining the valid time of the handling rule includes:
determining the valid time of the handling rule based on local policy configuration or valid time information carried by the handling rule.

An embodiment of the present application also provides an information processing method performed by an Application Function (AF) device, including:
sending information on dynamic group to a first device, wherein the first device is a Policy Control Function (PCF) device or a Network Exposure Function (NEF) device;
wherein the information on dynamic group includses at least one of indication information or grouping information;
the indication information is used to instruct a Session Management Function (SMF) device to configure a handling rule for a User Plane Function (UPF) device or an Edge Application Server Discovery Function (EASDF) device based on a first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by a SMF device based on the grouping information.

Optionally, the grouping information includes at least one of the followings:
location information of the UE;
application information associated with the UE;
first time period information; or
group identifier associated with the UE.

Optionally, the handling rule indicates at least one of the followings:
common EAS address set information;
common Domain Name System (DNS) server address information;
common Extended DNS (EDNS) client subnet option indication information;
common DNAI information;
common L-DN information; or
a traffic steering rule.

Optionally, the handling rule further indicates: valid time information of the handling rule itself.

An embodiment of the present application also provides an information processing method performed by a first device, including:
receiving information on dynamic group sent by an Application Function (AF) device;
obtaining Policy and Charging Control (PCC) policy information based on the information on dynamic group;
sending the PCC policy information to a Session Management Function (SMF) device;
wherein the first device is a Policy Control Function (PCF) device or a Network Exposure Function (NEF) device;
the information on dynamic group includes at least one of indication information or grouping information;
the indication information is used to instruct a SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by the SMF device based on the grouping information;
the PCC policy information includes at least one of the indication information or the grouping information.

Optionally, the grouping information includes at least one of the followings:
location information of the UE;
application information associated with the UE;
first time period information; or
group identifier associated with the UE.

Optionally, the handling rule indicates at least one of the followings:
common EAS address set information;
common Domain Name System (DNS) server address information;
common Extended DNS (EDNS) client subnet option indication information; or
common DNAI information;
common L-DN information; or
a traffic steering rule.

Optionally, the handling rule further indicates: valid time information of the handling rule itself.

An embodiment of the present application also provides an information processing device, the information processing device is a Session Management Function (SMF) device, including a memory, a transceiver, and a processor;
wherein the memory is configured to store a computer program; the transceiver is configured to receive and send data under the control of the processor; the processor is configured to read the computer program in the memory and perform the following operations:
determining a first dynamic UE group based on grouping information;
configuring a handling rule for a User Plane Function (UPF) device or an Edge Application Server Discovery Function (EASDF) device based on the first dynamic UE group;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group.

Optionally, the grouping information includes at least one of the followings:
location information of the UE;
application information associated with the UE;
first time period information; or
group identifier associated with the UE.

Optionally, the handling rule indicate at least one of the followings:
common EAS address set information;
common Domain Name System (DNS) server address information;
common Extended DNS (EDNS) client subnet option indication information; or
common DNAI information;
common L-DN information; or
a traffic steering rule.

Optionally, determining the first dynamic UE group based on the grouping information includes:
determining the grouping information based on grouping trigger information;
determining the first dynamic UE group based on the grouping information.

Optionally, the grouping trigger information includes at least one of the followings:
local policy information; or
Policy and Charging Control (PCC) policy information provided by a Policy Control Function (PCF) device.

Optionally, the grouping trigger information includes at least one of: indication information or the grouping information;
wherein the indication information is used to instruct the SMF device to configure the handling rule for the UPF device or the EASDF device based on the first dynamic UE group.

Optionally, configuring the handling rule for the UPF device or the EASDF device based on the first dynamic UE group includes:
in the case it is determined that the UPF or EAS address corresponding to at least one UE in the first dynamic UE group needs to be replaced, configuring the handling rule for the UPF device or the EASDF device based on the first dynamic UE group.

Optionally, configuring the handling rule for the UPF device or the EASDF device based on the first dynamic UE group includes:
generating a corresponding DNS message handling rule for the first dynamic UE group;
sending the DNS message handling rule to the EASDF device;
wherein the DNS message handling rule is used to indicate: for at least one UE in the first dynamic UE group, a DNS query message initiated by the at least one UE is sent to a common local DNS server or target indication information is added through the EDNS client subnet option;
the target indication information is used to indicate a target Internet Protocol (IP) range.

Optionally, configuring the handling rule for the UPF device or the EASDF device based on the first dynamic UE group further includes:
obtaining at least one Fully Qualified Domain Name (FQDN);
updating the first dynamic UE group based on the at least one FQDN;
updating the DNS message handling rule for an updated first dynamic UE group;
sending an updated DNS message handling rule to the EASDF device.

Optionally, configuring the handling rule for the UPF device or the EASDF device based on the first dynamic UE group includes:
configuring the handling rule for the UPF device or the EASDF device based on first information of at least one UE in the first dynamic UE group;
wherein the first information includes at least one of the followings:
   EAS information; or
   Protocol Data Unit (PDU) session information.

Optionally, the handling rule further indicates: valid time information of the handling rule itself.

Optionally, the operations of the information processing device further include:
after configuring the handling rule for the UPF device or the EASDF device based on the first dynamic UE group, performing at least one of the following operations based on the handling rule:
performing selection and/or insertion of at least one of an Uplink Classifier (UL CL) or Branching Point (BP), or a PDU session anchor UPF; or
determining a DNS server.

Optionally, the operations of the information processing device further include:
after configuring the handling rule for the UPF device or the EASDF device based on the first dynamic UE group, performing at least one of the following operations based on the handling rule:
performing selection and/or insertion of at least one of an Uplink Classifier (UL CL) or Branching Point (BP), or a PDU session anchor UPF; or
determining a DNS server.

Optionally, the operation of the information processing device further includes:
after configuring the handling rule for the UPF device or the EASDF device based on the first dynamic UE group, configuring a traffic routing rule to the UL CL or BP based on the handling rule;
wherein the traffic routing rule indicates that the UL CL is configured with common DNS server address, or the BP is configured with a same IP address prefix.

An embodiment of the present application also provides an information processing device, the information processing device is an Edge Application Server Discovery Function (EASDF) device, including a memory, a transceiver, and a processor;
the memory is configured to store a computer program; the transceiver is configured to receive and send data under the control of the processor; the processor is configured to read the computer program in the memory and perform the following operations:
receiving a handling rule sent by a Session Management Function(SMF) device through the transceiver;
processing a Domain Name System (DNS) query message based on the handling rule;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the handling rule is a rule configured for a User Plane Function (UPF) device or an EASDF device;
the first dynamic UE group is a UE group determined by the SMF device based on grouping information.

Optionally, the grouping information includes at least one of the followings:
location information of the UE;
application information associated with the UE;
first time period information; or
group identifier associated with the UE.

Optionally, receiving the handling rule sent by the SMF device includes:
receiving a DNS message handling rule sent by the SMF device;
wherein the DNS message handling rule is used to indicate: for at least one UE in the first dynamic UE group, a DNS query message initiated by the at least one UE is sent to a common local DNS server or target indication information is added through an Extended DNS (EDNS) client subnet option;
the target indication information is used to indicate a target Internet Protocol (IP) range.

Optionally, receiving the handling rule sent by the SMF device further includes:
receiving an updated DNS message handling rule sent by the SMF device.

Optionally, the handling rule indicates at least one of the followings:
common EAS address set information;
common DNS server address information;
common EDNS client subnet option indication information;
common DNAI information;
common L-DN information; or
a traffic steering rule.

Optionally, the operations of the information processing device further include:
after receiving the handling rule sent by the SMF device, determining valid time of the handling rule;
when the handling rule is within the valid time, sending EAS information to at least one UE in the first dynamic UE group through the transceiver based on the handling rule;
when the handling rule exceeds the valid time, sending a DNS query message corresponding to at least one UE in the first dynamic UE group to the DNS server through the transceiver;
receiving the EAS information fed back by the DNS server through the transceiver and sending it to at least one UE in the first dynamic UE group.

Optionally, determining the valid time of the handling rule includes:
determining the valid time of the handling rule based on local policy configuration or valid time information carried by the handling rule.

An embodiment of the present application also provides an information processing device, the information processing device is an Application Function (AF) device, including a memory, a transceiver, and a processor;
the memory is configured to store a computer program; the transceiver is configured to receive and send data under the control of the processor; the processor is configured to read the computer program in the memory and perform the following operations:
sending information on dynamic group to a first device through the transceiver, wherein the first device is a Policy Control Function (PCF) device or a Network Exposure Function (NEF) device;
the information on dynamic group includes at least one of indication information or grouping information;
the indication information is used to instruct a Session Management Function (SMF) device to configure a handling rule for a User Plane Function (UPF) device or an Edge Application Server Discovery Function (EASDF) device based on a first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by the SMF device based on grouping information.

Optionally, the grouping information includes at least one of the followings:
location information of the UE;
application information associated with the UE;
first time period information; or
group identifier associated with the UE.

Optionally, the handling rule indicates at least one of the followings:
common EAS address set information;
common Domain Name System (DNS) server address information;
common Extended DNS (EDNS) client subnet option indication information;
common DNAI information;
common L-DN information; or
a traffic steering rule.

Optionally, the handling rule further indicates: valid time information of the handling rule itself.

An embodiment of the present application also provides an information processing device, the information processing device is a first device, including a memory, a transceiver, and a processor;
the memory is configured to store a computer program; the transceiver is configured to receive and send data under the control of the processor; the processor is configured to read the computer program in the memory and perform the following operations:
receiving information on dynamic group sent by an Application Function (AF) device through the transceiver;
obtaining Policy and Charging Control (PCC) policy information based on the information on dynamic group;
sending the PCC policy information to a Session Management Function (SMF) device through the transceiver;
wherein the first device is a Policy Control Function (PCF) device or a Network Exposure Function (NEF) device;
the information on dynamic group includes at least one of indication information or grouping information;
the indication information is used to instruct a SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by the session management function device based on the grouping information;
the PCC policy information includes at least one of the indication information or the grouping information.

Optionally, the grouping information includes at least one of the followings:
location information of the UE;
application information associated with the UE;
first time period information; or
group identifier associated with the UE.

Optionally, the handling rule indicates at least one of the followings:
common EAS address set information;
common Domain Name System (DNS) server address information;
common Extended DNS (EDNS) client subnet option indication information;
common DNAI information;
common L-DN information; or
a traffic steering rule.

Optionally, the handling rule further indicates: valid time information of the handling rule itself.

An embodiment of the present application also provides an information processing apparatus applied to a Session Management Function (SMF) device, including:
a first determination unit, configured to determine a first dynamic UE group based on grouping information;
a first configuration unit, configured to configure a handling rule for a User Plane Function (UPF) device or an Edge Application Server Discovery Function (EASDF) device based on the first dynamic UE group;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group.

Optionally, the grouping information includes at least one of the followings:
location information of the UE;
application information associated with the UE;
first time period information; or
group identifier associated with the UE.

Optionally, the handling rule indicates at least one of the followings:
common EAS address set information;
common Domain Name System (DNS) server address information;
common Extended DNS (EDNS) client subnet option indication information;
common DNAI information;
common L-DN information; or
a traffic steering rule.

Optionally, determining the first dynamic UE group based on the grouping information includes:
determining the grouping information based on grouping trigger information;
determining the first dynamic UE group based on the grouping information.

Optionally, the grouping trigger information includes at least one of the followings:
local policy information; or
Policy and Charging Control (PCC) policy information provided by a Policy Control Function (PCF) device.

Optionally, the grouping trigger information includes at least one of: indication information or the grouping information;
the indication information is used to instruct the SMF device to configure the handling rule for the UPF device or the EASDF device based on the first dynamic UE group.

Optionally, configuring the handling rule for the UPF device or the EASDF device based on the first dynamic UE group includes:
in the case it is determined that the UPF or EAS address corresponding to at least one UE in the first dynamic UE group needs to be replaced, configuring the handling rule for the UPF device or the EASDF device based on the first dynamic UE group.

Optionally, configuring the handling rule for the UPF device or the EASDF device based on the first dynamic UE group includes:
generating a corresponding DNS message handling rule for the first dynamic UE group;
sending the DNS message handling rule to the EASDF device;
wherein the DNS message handling rule is used to indicate: for at least one UE in the first dynamic UE group, a DNS query message initiated by the at least one UE is sent to a common local DNS server or target indication information is added through the EDNS client subnet option;
the target indication information is used to indicate a target Internet Protocol (IP) range.

Optionally, configuring the handling rule for the UPF device or the EASDF device based on the first dynamic UE group further includes:
obtaining at least one Fully Qualified Domain Name (FQDN);
updating the first dynamic UE group based on the at least one FQDN;
updating the DNS message handling rule for an updated first dynamic UE group;
sending an updated DNS message handling rule to the EASDF device.

Optionally, wherein configuring the handling rule for the UPF device or the EASDF device based on the first dynamic UE group includes:
configuring the handling rule for the UPF device or the EASDF device based on first information of at least one UE in the first dynamic UE group;
wherein the first information includes at least one of the followings:
   EAS information; or
   Protocol Data Unit (PDU) session information.

Optionally, the handling rule further indicates: valid time information of the handling rule itself.

Optionally, the information processing apparatus also includes:
a first execution unit, which is used, after configuring the handling rule for the UPF device or the EASDF device based on the first dynamic UE group, to perform at least one of the following operations based on the handling rule:
performing selection and/or insertion of at least one of an Uplink Classifier (UL CL) or Branching Point (BP), or a PDU session anchor UPF; or
determining a DNS server.

Optionally, the information processing apparatus also includes:
a second configuration unit, which is used, after configuring the handling rule for the UPF device or the EASDF device based on the first dynamic UE group, to configure a traffic routing rule to the UL CL or BP based on the handling rule;
wherein the traffic routing rule indicates that the UL CL is configured with common DNS server address, or the BP is configured with a same IP address prefix.

An embodiment of the present application also provides an information processing apparatus applied to an Edge Application Server Discovery Function (EASDF) device, including:
a first receiving unit, configured to receive a handling rule sent by a Session Management Function (SMF) device;
a first processing unit, configured to process a Domain Name System (DNS) query message based on the handling rule;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the handling rule is a rule configured for a User Plane Function (UPF) device or the EASDF device;
the first dynamic UE group is a UE group determined by the SMF device based on grouping information.

Optionally, the grouping information includes at least one of the followings:
location information of the UE;
application information associated with the UE;
first time period information; or
group identifier associated with the UE.

Optionally, receiving the handling rule sent by the SMF device includes:
receiving a DNS message handling rule sent by the SMF device;
wherein the DNS message handling rule is used to indicate: for at least one UE in the first dynamic UE group, a DNS query message initiated by the at least one UE is sent to a common local DNS server or target indication information is added through an Extended DNS (EDNS) client subnet option;
the target indication information is used to indicate a target Internet Protocol (IP) range.

Optionally, receiving the handling rule sent by the SMF device further includes:
receiving an updated DNS message handling rule sent by the SMF device.

Optionally, the handling rule indicates at least one of the followings:
common EAS address set information;
common DNS server address information;
common EDNS client subnet option indication information;
common DNAI information;
common L-DN information; or
a traffic steering rule.

Optionally, the information processing apparatus further includes:
a second determination unit, configured to determine the valid time of the handling rule after receiving the handling rule sent by the SMF device;
a first sending unit, configured to send the EAS information to at least one UE in the first dynamic UE group based on the handling rule when the handling rule is within the valid time;
a second sending unit, configured to send a DNS query message corresponding to at least one UE in the first dynamic UE group to the DNS server when the handling rule exceeds the valid time;
a first transceiver unit, configured to receive the EAS information fed back by the DNS server and send it to at least one UE in the first dynamic UE group.

Optionally, determining the valid time of the handling rule includes:
determining the valid time of the handling rule based on local policy configuration or valid time information carried by the handling rule.

An embodiment of the present application also provides an information processing apparatus applied to an Application Function (AF) device, including:
a third sending unit, configured to send information on dynamic group to a first device, wherein the first device is a Policy Control Function (PCF) device or a Network Exposure Function (NEF) device;
wherein the information on dynamic group includes at least one of indication information or grouping information;
the indication information is used to instruct a Session Management Function (SMF) device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by the SMF device based on the grouping information.

Optionally, the grouping information includes at least one of the followings:
location information of the UE;
application information associated with the UE;
first time period information; or
group identifier associated with the UE.

Optionally, the handling rule indicates at least one of the followings:
common EAS address set information;
common Domain Name System (DNS) server address information;
common Extended DNS (EDNS) client subnet option indication information;
common DNAI information;
common L-DN information; or
a traffic steering rule.

Optionally, the handling rule further indicates: valid time information of the handling rule itself.

An embodiment of the present application also provides an information processing apparatus applied to a first device, including:
a second receiving unit, configured to receive information on dynamic group sent by Application Function (AF) device;
a second processing unit, configured to obtain Policy and Charging Control (PCC) policy information based on the information on dynamic group;
a fourth sending unit, configured to send the PCC policy information to a Session Management Function (SMF) device;
wherein the first device is a Policy Control Function (PCF) device or a Network Exposure Function (NEF) device;
the information on dynamic group includes at least one of indication information or grouping information;
the indication information is used to instruct the SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by the SMF device based on the grouping information;
the PCC policy information includes at least one of the indication information or the grouping information.

Optionally, the grouping information includes at least one of the followings:
location information of the UE;
application information associated with the UE;
first time period information; or
group identifier associated with the UE.

Optionally, the handling rule indicates at least one of the followings:
common EAS address set information;
common Domain Name System (DNS) server address information;
common Extended DNS (EDNS) client subnet option indication information;
common DNAI information;
common L-DN information; or
a traffic steering rule.

Optionally, the handling rule further indicates: valid time information of the handling rule itself.

An embodiment of the present application also provides a processor-readable storage medium storing a computer program, wherein the computer program is used to cause a processor to execute the information processing method on a Session Management Function (SMF) device side; or,
the computer program is used to cause a processor to execute the information processing method on an Edge Application Server Discovery Function (EASDF) device side; or,
the computer program is used to cause a processor to execute the information processing method on an Application Function (AF) device side; or,
the computer program is used to cause a processor to execute the information processing method on a first device side.

Beneficial effects of the technical solutions of the present application are as follows:
in the solutions of the present disclosure, the information processing method includes: determining the first dynamic UE group based on the grouping information; configuring a handling rule for a User Plane Function (UPF) device or an Edge Application Server Discovery Function (EASDF) device based on the first dynamic UE group; wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group. It can support information processing for a non-predefined UE group (i.e., a dynamic UE group) to achieve the purpose of reducing interaction delay or enabling traffic steering.

### BRIEF DESCRIPTION OF THE DRAWINGS

Fig. 1 shows a schematic diagram of the wireless communication system architecture according to an embodiment of the present application;
Fig. 2 shows a schematic diagram of a network architecture combining edge computing in a non-roaming scenario of a 5G system according to an embodiment of the application;
Fig. 3 shows another schematic diagram of a network architecture combining edge computing in a non-roaming scenario of a 5G system according to an embodiment of the application;
Fig. 4 shows a flow chart of the information processing method according to an embodiment of the present application;
Fig. 5 shows another flow chart of the information processing method according to an embodiment of the present application;
Fig. 6 shows yet another flow chart of the information processing method according to an embodiment of the present application;
Fig. 7 shows still yet another flow chart of the information processing method according to an embodiment of the present application;
Fig. 8 shows a schematic diagram of the scenario according to an embodiment of the present application;
Fig. 9 shows a flow chart of Example 1 according to an embodiment of the present application;
Fig. 10 shows a flow chart of Example 3 according to an embodiment of the present application;
Fig. 11 shows a flow chart of Example 5 according to an embodiment of the present application;
Fig. 12 shows a structural diagram of the information processing device according to an embodiment of the present application;
Fig. 13 shows another structural diagram of the information processing device according to an embodiment of the present application;
Fig. 14 shows yet another structural diagram of the information processing device according to an embodiment of the present application;
Fig. 15 shows still yet another structural diagram of the information processing device according to an embodiment of the present application;
Fig. 16 shows a structural diagram of the information processing apparatus according to an embodiment of the present application;
Fig. 17 shows another structural diagram of the information processing apparatus according to an embodiment of the present application;
Fig. 18 shows yet another structural diagram of the information processing apparatus according to an embodiment of the present application;
Fig. 19 shows still yet another structural diagram of the information processing apparatus according to an embodiment of the present application.

### DETAILED DESCRIPTION

The technical solutions in the embodiments of the present application will be clearly and thoroughly described below with reference to the accompanying drawings in the embodiments of the present application. Obviously, the described embodiments are only some of the embodiments of the present application, not all of them. Based on the embodiments in the present application, all other embodiments obtained by those of ordinary skill in the art without making creative efforts fall within the scope of the present application.

In the embodiments of the present application, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of the present application, the term "plurality" refers to two or more than two, and other quantifiers are similar to it.

It should be noted that the technical solutions provided by the embodiments of the present application can be applied to a variety of systems, especially 5G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a UE and a network device. The system can also include a core network part, such as the evolved packet system (EPS), 5G System (5GS), etc.

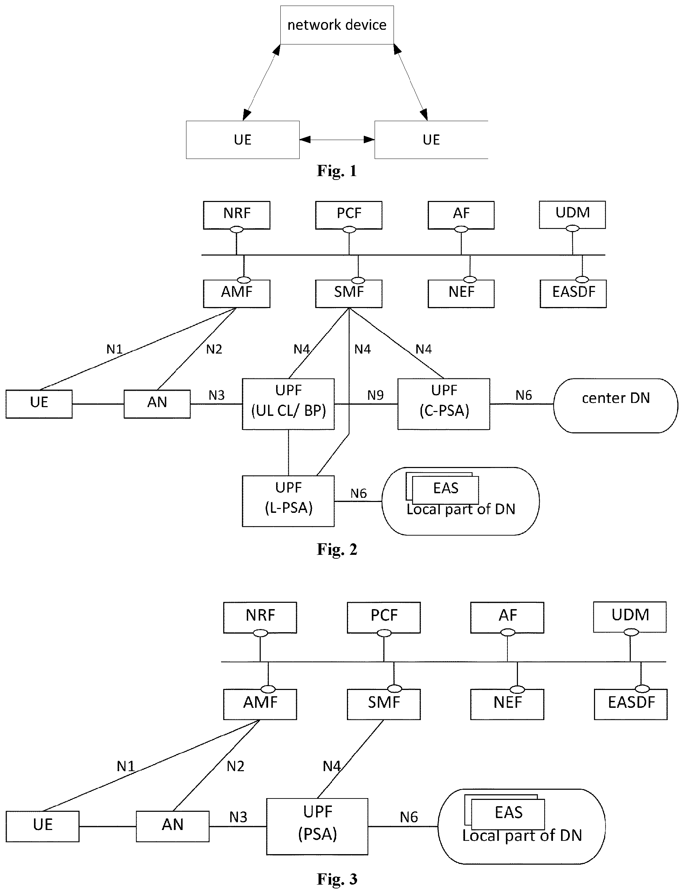

Fig. 1 shows a block diagram of a wireless communication system applicable to an embodiment of the present application. The wireless communication system includes a UE and a network device. The UE can be referred to as a terminal or terminal device.

The terminal involved in the embodiments of the present application may be a device that provides voice and/or data connectivity to a user, a handheld device with a wireless connection function, or another processing device connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, a portable, pocket-sized, handheld, computer-built-in or vehicle-mounted mobile device, which exchange audio and/or data with a radio access network. For example, a Personal Communication Service (PCS) phone, cordless phone, Session Initiated Protocol (SIP) phone, Wireless Local Loop (WLL) station, Personal Digital Assistants (PDA) or another device. A wireless terminal device may also be called a system, a subscriber unit, a subscriber station, a mobile station, a mobile, a remote station, an access point, a remote terminal, access terminal, a user terminal, a user agent, or a user device, which is not limited in the embodiments of the present application.

The network device involved in the embodiments of the present application may be a base station, and the base station may include multiple cells that provide services to terminals. Depending on the specific application, a base station can also be called an access point, or it can be a device in the access network that communicates with the wireless terminal device through one or more sectors on the air interface, or it can be named by another name. A network device can be used to exchange received air frames with Internet Protocol (IP) packets and act as a router between the wireless terminal device and the rest of the access network, wherein the rest of the access network can include the IP communications network. The network device may also coordinate attribute management of the air interface. For example, the network device involved in the embodiments of the present application may be a network device (Base Transceiver Station, BTS) in Global System for Mobile communications (GSM) or Code Division Multiple Access (CDMA) system, or it can be a network device (NodeB) in a Wide-band Code Division Multiple Access (WCDMA), or an evolved Node B (eNB or e-NodeB) in a Long Term Evolution (LTE) system, a 5G base station (gNB) in a 5G network architecture (next generation system), or a Home evolved Node B (HeNB), a relay node, a femto, a pico, etc., which is not limited in the embodiments of the present application. In some network structures, the network device may include a Centralized Unit (CU) node and Distributed Unit (DU) nodes, and the centralized unit and the distributed units may also be arranged geographically separately.

The network device and the UE may each perform Multi-Input Multi-Output (MIMO) transmission with each other by using one or more antennas. The MIMO transmission may be Single User MIMO (SU-MIMO) or Multiple User MIMO (MU-MIMO). According to the configuration and quantity of antenna combinations, the MIMO transmission may be two Dimensional-MIMO (2D-MIMO), three Dimensional-MIMO (3D-MIMO), Full Dimensional-MIMO (FD-MIMO) or massive-MIMO, and may be diversity transmission, precoded transmission, beam forming transmission, or the like.

The following section provides an introduction to the contents involved in the solutions provided by the embodiments of the present application.

### Part 1

The Mobile Edge Computing (MEC) technology migrates a computing storage capability and a business service capability to the edge of the network, which minimizes the need to transmit data back to the cloud, and reduces latency and network costs associated with data round trips to the cloud. Based on a 5G-based distributed cloud infrastructure, a 5G user plane and a 5G MEC node are constructed at the edge of the cloud. The 5G MEC node provides an MEC application platform to implement deployment and management of a third-party application. The user can obtain a service through an MEC application.

The 5G system defines an Application Function (AF), which sends an AF request to a non-trusted domain (Network Exposure Function, NEF) or to a trusted domain (Policy Control Function, PCF). The request includes multiple parameters such as a target Data Network Name (DNN), an application identification (ID), an interface (N6) routing requirement, an application location, etc. Based on the information parameters provided by the AF and combined with its own policy control, the PCF generates a Policy and Charging Control (PCC) rule for target Protocol Data Unit (PDU) session service flow, and selects an appropriate User Plane Function (UPF) through a Session Management Function (SMF). The MEC provides an application infrastructure resource arrangement, an application instantiation, application rule configuration and other functions. Therefore, when the MEC is deployed in the 5G system, it can act as an Application Function (AF), representing the application deployed on the MEC to interact with the 5G system control plane.

Refer to Figs. 2 and 3 for the network architecture of the 5G system in a non-roaming scenario combined with edge computing. In Fig. 2, an edge computing server is accessed through an Uplink Classifier or Branching Point (UL CL/BP) in the non-roaming scenario. In Fig. 3, the edge computing server is accessed (without the UL CL/BP participation) in the non-roaming scenario. The main network functions in the 5GS architecture shown in Fig. 2 and Fig. 3 are as follows.

AMF: Access and Mobility Management Function, which supports registration, connection management, etc.

UPF: User Plane Function, which supports external Protocol Data Unit (PDU) session node interconnected with data network, packet routing, and forwarding.

SMF: Session Management Function, which supports session establishment and deletion, user plane selection and control, terminal (UE) IP allocation, etc.

AF: Application Function, which interacts with the core network to provide a service. Based on an operator's deployment, a trusted AF can directly interact with a related network function (NF), while a non-trusted AF cannot interact directly with the NF, but should use external open framework through the NEF.

PCF: Policy Control Function, which supports a unified policy framework to manage network behavior and provides a policy rule for the NF of the control plane to execute.

NRF: Network Repository Function, which supports service discovery function.

UDM: Unified Data Management, which supports storage of UE information, such as subscription information and established PDU session information, etc.

NEF: Network Exposure Function, which supports the function of securely exposing the service and capability provided by the network to an external network.

UDR: Unified Data Repository, which supports the storage of subscription data, UDM retrieval of subscription data, the storage of policy information, and PCF retrieval of policy information.

EASDF: Edge Application Server Discovery Function, which supports processing a Domain Name System (DNS) message based on a SMF instruction.

EAS: Edge Application Server, which supports providing an edge service.

Local part of DN, which is referred to as L-DN, and represents a set of network entities deployed in a local data network. Local access DN provides access to the local part of DN.

Additionally, AN represents Access Network; ULCL/BP represents Uplink Classifier or Branching Point; PSA represents PDU Session Anchor; C-PSA represents Central PDU Session Anchor; Central DN represents Central Data Network; L-PSA represents Local PDU Session Anchor.

Furthermore, to support selective data routing to a Data Network (DN), the SMF can control a data path of a PDU session to ensure that the PDU session can correspond to multiple N6 interfaces at the same time. Each anchor supporting the PDU session provides different access paths to a common DN to enable local diversion; this can be achieved through the Uplink Classifier (UL CL) function and/or an Internet Protocol version (IPv) 6 multi-homing function Branching Point (BP). This architecture is called a session breakout connection model.

There are currently some application scenarios that need to support a dynamically non-predefined UE group, when the PSA UPF and the Edge Application Server (EAS) used in these scenarios need to be relocated, it should ensure the low latency of the relocation. The scenario examples are as follows.

Interactive multi-user gaming: different UEs are identified by the application. For example, the UEs in a geographical area need to access to a same game service for interaction. The UEs should connect to a same application server or an application server associated with a common DN Access Identifier (DNAI) or an application server belonging to a common Local part of DN (L-DN) to reduce an interaction delay on the application server side.

Online meeting: it cannot predetermine to which terminal of the online meeting (e-meeting) the different UEs access, but if the UEs accessing a same meeting connect to a same e-meeting server, the interaction delay on the application server side can be reduced. At the same time, the communication traffic between application servers is also reduced, which will greatly reduce costs.

### Part 2

Currently, an application can request the 5G System (5GS) to change traffic routing for one or a group of UEs (indicated by an Internal Group Identifier) or any UE (indicated by the DNN, Single Network Slice Selection Assistance Information (S-NSSAI), and the DNAI).

EAS Deployment Information (EDI) indicates how an edge service is deployed in each Local DN. The AF can create, update, or delete the EDI and distribute it to the SMF. The Network Exposure Function (NEF) is responsible for managing and storing the EDI in the Unified Data Repository (UDR).

The SMF can obtain EDI from the NEF or have local pre-configured information. The EDI can be used to create a Domain Name System (DNS) message handling rule on the Edge Application Server Discovery Function (EASDF). The SMF configures the message handling rule into the EASDF to handle DNS information associated with the UE.

The SMF creates the DNS message handling rule based on local configuration associated with the DNN and/or the S-NSSAI, the EDI, a UE location, PDU session information, etc. The DNS message handling rule includes: identifying a target DNS query based on a UE IP address range or a Fully Qualified Domain Name (FQDN) range; identifying a DNS response based on an EAS IP address range and/or the FQDN range; and an action indication (such as Reporting Action, Forwarding Action, and/or Control Action).

In view of the above, an embodiment of the present application provides an information processing method, apparatus, and device to solve the problems in related art where the information processing solution for a non-predefined UE group (i.e., a dynamic UE group) cannot reduce interaction delay and cannot enable traffic steering. The method, the apparatus and the device are conceived based on a same inventive concept. Since principles of solving problems by the methods, the apparatus and the device are similar, their implementations may refer to each other, and repetitions will not be further elaborated herein.

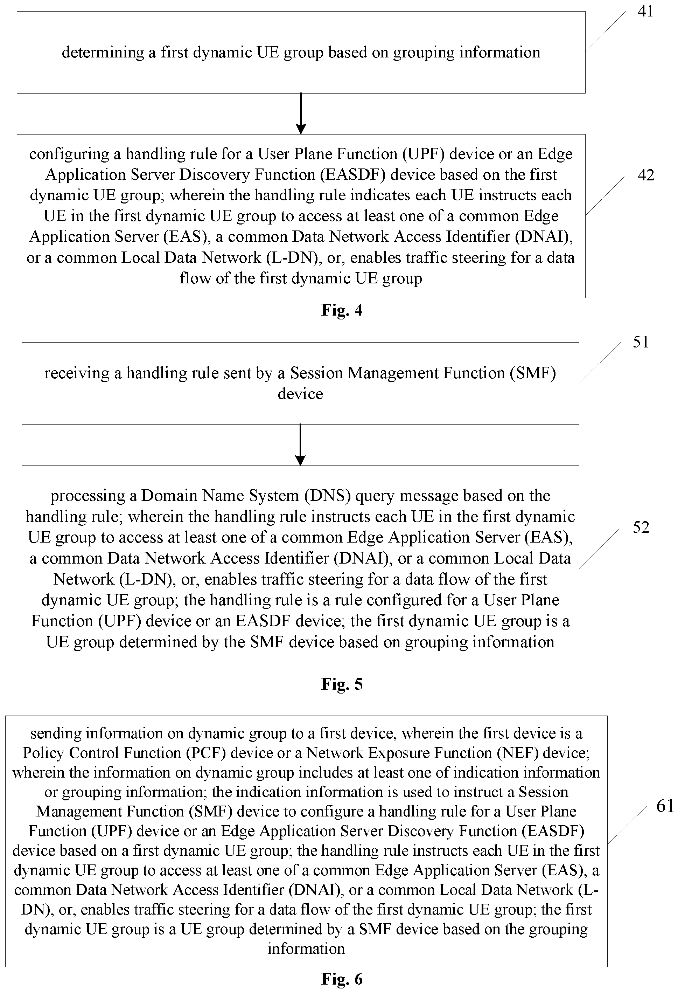

An embodiment of the present application provides an information processing method performed by a Session Management Function (SMF) device, as shown in Fig. 4, including:
step 41: determining a first dynamic UE group based on grouping information;
step 42: configuring a handling rule for a User Plane Function (UPF) device or an Edge Application Server Discovery Function (EASDF) device based on the first dynamic UE group; wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group.

The information processing method provided by the embodiments of the present application determines the first dynamic UE group based on the grouping information; configures a handling rule for a User Plane Function (UPF) device or an Edge Application Server Discovery Function (EASDF) device based on the first dynamic UE group; wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group. It can support information processing for a non-predefined UE group (i.e., a dynamic UE group) to achieve the purpose of reducing interaction delay or enabling traffic steering.

The grouping information includes at least one of the followings: location information of the UE; application information associated with the UE; first time period information; or group identifier associated with the UE.

This allows for accurate UE grouping. Specifically, for example: (1) when the location information of the UE belongs to a specific location area, it is determined that the UE belongs to the corresponding UE dynamic group; or, based on the location information of the UE, it is determined that the relative positions of the two UEs are within a specific distance, then the two UEs belong to a same UE dynamic group; (2) when the application information associated with the UEs is the same, it is determined that the UEs belong to the same UE dynamic group; (3) the above conditions (1) and (2) can be combined; (4) in the first time period, if the above conditions (1) and/or (2) are met, it is determined that the UE belongs to the corresponding UE dynamic group; (5) when the group identifier associated with the UE belongs to a specific group identifier, it is determined that the UE belongs to the corresponding UE dynamic group; in this way, the UE grouping can be realized in a diversified and accurate manner.

In the embodiments of the present application, the handling rule indicates at least one of the followings: common EAS address set information; common Domain Name System (DNS) server address information; common Extended DNS (EDNS) client subnet option indication information; common DNAI information, common Local Data Network (L-DN) information; or a traffic steering rule.

This can ensure that the common EAS, the common DNAI and/or the common L-DN are accurately discovered for the UEs in the first dynamic UE group, as well as the coordinated UPF and EAS switching, thereby reducing the interaction delay and switching delay on the application server side to ensure service continuity; and can support traffic offloading or traffic steering to the edge for the first dynamic UE group.

The determining the first dynamic UE group based on the grouping information includes: determining the grouping information based on grouping trigger information; determining the first dynamic UE group based on the grouping information.

This can further ensure the accuracy of the solution.

In the embodiments of the present application, the grouping trigger information includes at least one of the followings: local policy information; or Policy and Charging Control (PCC) policy information provided by a Policy Control Function (PCF) device.

This can ensure the diversity of the solution implementation.

The grouping trigger information includes at least one of: indication information or the grouping information; wherein the indication information is used to instruct the SMF device to configure the handling rule for the UPF device or the EASDF device based on the first dynamic UE group.

This allows that the execution of the solution can be triggered by external information, thereby further ensuring the feasibility of the solution.

In the embodiments of the present application, configuring the handling rule for the UPF device or the EASDF device based on the first dynamic UE group includes: in the case it is determined that the UPF or an EAS address corresponding to at least one UE in the first dynamic UE group needs to be replaced, configuring the handling rule for the UPF device or the EASDF device based on the first dynamic UE group.

This can ensure accurate rediscovery of the common EAS, the common DNAI and/or the common L-DN for the UE in the first dynamic UE group, as well as coordinated UPF and EAS switching, thereby reducing the interaction delay and switching delay on the application server side to ensure service continuity. The UPF may include PSA UPF and/or UL CL/BP UPF, which is not limited here.

Configuring the handling rule for the UPF device or the EASDF device based on the first dynamic UE group includes: generating a corresponding DNS message handling rule for the first dynamic UE group; sending the DNS message handling rule to the EASDF device; wherein the DNS message handling rule is used to indicate: for at least one UE in the first dynamic UE group, a DNS query message initiated by the at least one UE is sent to a common local DNS server or target indication information is added through the EDNS client subnet option; the target indication information is used to indicate a target Internet Protocol (IP) range.

This ensures the specific implementation of the solution.

In the embodiments of the present application, configuring the handling rule for the UPF device or the EASDF device based on the first dynamic UE group further includes: obtaining at least one Fully Qualified Domain Name (FQDN); updating the first dynamic UE group based on the at least one FQDN; updating the DNS message handling rule for an updated first dynamic UE group; sending an updated DNS message handling rule to the EASDF device.

This can further ensure the accuracy.

The configuring the handling rule for the UPF device or the EASDF device based on the first dynamic UE group includes: configuring the handling rule for the UPF device or the EASDF device based on first information of at least one UE in the first dynamic UE group; wherein the first information includes at least one of the followings: EAS information; or Protocol Data Unit (PDU) session information.

This allows for accurate rule configuration.

Furthermore, before configuring the handling rule for the UPF device or EASDF device based on the first information of at least one UE in the first dynamic UE group, it may also include: saving the first information.

The handling rule further indicates: valid time information of the handling rule itself.

This can further ensure the accuracy of the solution.

Furthermore, after configuring the handling rule for the UPF device or the EASDF device based on the first dynamic UE group, the information processing method further includes: performing at least one of the following operations based on the handling rule: performing selection and/or insertion of at least one of an Uplink Classifier (UL CL) or Branching Point (BP), or a PDU session anchor UPF; or determining a DNS server.

This can ensure the complete implementation of the solution.

In the embodiments of the present application, after configuring the handling rule for the UPF device or the EASDF device based on the first dynamic UE group, the information processing method further includes: configuring a traffic routing rule to the UL CL or BP based on the handling rule; wherein the traffic routing rule indicates that the UL CL is configured with common DNS server address, or the BP is configured with a same IP address prefix.

This can further ensure the accurate implementation of the solution.

An information processing method provided by an embodiment of the present application performed by an Edge Application Server Discovery Function (EASDF) device, as shown in Fig. 5, including:
step 51: receiving a handling rule sent by a Session Management Function (SMF) device;
step 52: processing a Domain Name System (DNS) query message based on the handling rule; wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the handling rule is a rule configured for a User Plane Function (UPF) device or an EASDF device; the first dynamic UE group is a UE group determined by the SMF device based on grouping information.

In the information processing method provided by the embodiments of the present application, it receives a handling rule sent by a Session Management Function (SMF) device; processes a Domain Name System (DNS) query message based on the handling rule; wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the handling rule is a rule configured for a User Plane Function (UPF) device or an EASDF device; the first dynamic UE group is a UE group determined by the SMF device based on grouping information. It can support information processing for a non-predefined UE group (i.e., a dynamic UE group) to achieve the purpose of reducing interaction delay or enabling traffic steering.

The grouping information includes at least one of the followings: location information of the UE; application information associated with the UE; first time period information; or group identifier associated with the UE.

This allows accurate UE grouping.

In the embodiments of the present application, the receiving the handling rule sent by the SMF device includes: receiving a DNS message handling rule sent by the SMF device; wherein the DNS message handling rule is used to indicate: for at least one UE in the first dynamic UE group, a DNS query message initiated by the at least one UE is sent to a common local DNS server or target indication information is added through an Extended DNS (EDNS) client subnet option; the target indication information is used to indicate a target Internet Protocol (IP) range.

This ensures the specific implementation of the solution.

The receiving the handling rule sent by the SMF device further includes: receiving an updated DNS message handling rule sent by the SMF device.

This can further ensure the accuracy.

In the embodiments of the present application, the handling rule indicates at least one of the followings: common EAS address set information; common DNS server address information; common EDNS client subnet option indication information; common DNAI information, common L-DN information; or a traffic steering rule.

This can ensure that the common EAS, the common DNAI and/or the common L-DN are accurately discovered for the UEs in the first dynamic UE group, as well as the coordinated UPF and EAS switching, thereby reducing the interaction delay and switching delay on the application server side to ensure service continuity; and can support traffic offloading or traffic steering to the edge for the first dynamic UE group.

Furthermore, after receiving the handling rule sent by the SMF device, the information processing method further includes: determining valid time of the handling rule; when the handling rule is within the valid time, sending EAS information to at least one UE in the first dynamic UE group based on the handling rule; when the handling rule exceeds the valid time, sending a DNS query message corresponding to at least one UE in the first dynamic UE group to the DNS server; receiving the EAS information fed back by the DNS server, and sending the EAS information to at least one UE in the first dynamic UE group.

This can further ensure the accuracy of the solution. There may be a corresponding relationship between the EAS information and the UE, and the EASDF device can send the EAS information to the corresponding UE accordingly.

In the embodiments of the present application, determining the valid time of the handling rule includes: determining the valid time of the handling rule based on local policy configuration or valid time information carried by the handling rule.

This can ensure the diversified implementation of the solution.

In an embodiment of the present application, an information processing method performed an Application Function (AF) device, as shown in Fig. 6, includes:
step 61: sending information on dynamic group to a first device, wherein the first device is a Policy Control Function (PCF) device or a Network Exposure Function (NEF) device; wherein the information on dynamic group includes at least one of indication information or grouping information; the indication information is used to instruct a Session Management Function (SMF) device to configure a handling rule for a User Plane Function (UPF) device or an Edge Application Server Discovery Function (EASDF) device based on a first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the first dynamic UE group is a UE group determined by a SMF device based on the grouping information.

The information processing method provided by the embodiments of the present application sends information on dynamic group to a first device, wherein the first device is a Policy Control Function (PCF) device or a Network Exposure Function (NEF) device; wherein the information on dynamic group includes at least one of indication information or grouping information; the indication information is used to instruct a Session Management Function (SMF) device to configure a handling rule for a User Plane Function (UPF) device or an Edge Application Server Discovery Function (EASDF) device based on a first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the first dynamic UE group is a UE group determined by a SMF device based on the grouping information. It can support information processing for a non-predefined UE group (i.e., a dynamic UE group) to achieve the purpose of reducing interaction delay or enabling traffic steering.

The grouping information includes at least one of the followings: location information of the UE; application information associated with the UE; first time period information; or group identifier associated with the UE.

This ensures an accurate UE grouping.

In the embodiments of the present application, the handling rule indicates at least one of the followings:
common EAS address set information; common Domain Name System (DNS) server address information; common Extended DNS (EDNS) client subnet option indication information; common DNAI information; common L-DN information; or a traffic steering rule.

This can ensure that the common EAS, the common DNAI and/or the common L-DN are accurately discovered for the UEs in the first dynamic UE group, as well as the coordinated UPF and EAS switching, thereby reducing the interaction delay and switching delay on the application server side to ensure service continuity; and can support traffic offloading or traffic steering to the edge for the first dynamic UE group.

Furthermore, the handling rule also indicates: valid time information of the handling rule itself.

This can further ensure the accuracy of the solution.

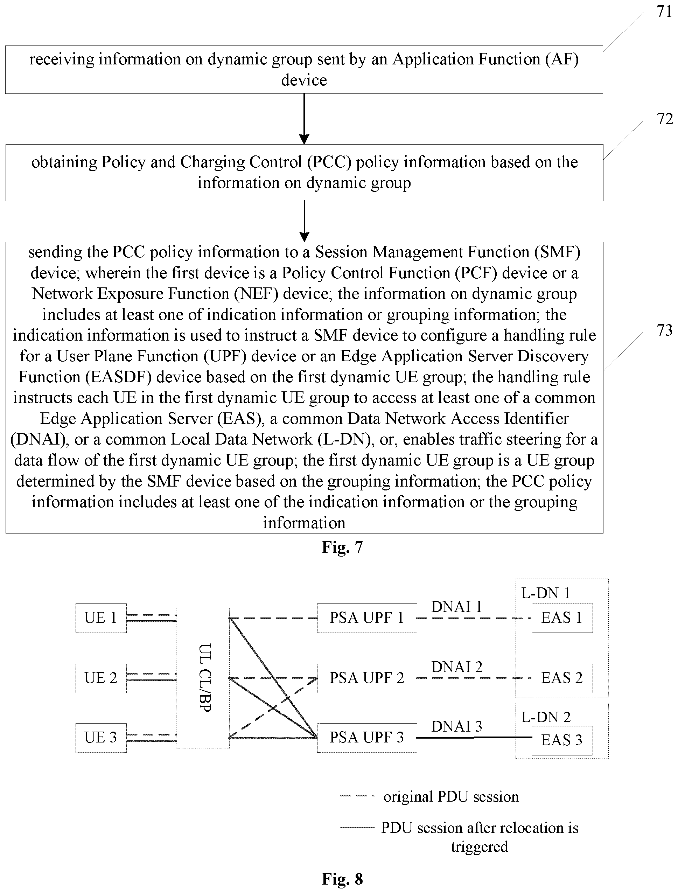

An information processing method provided by an embodiment of the present application performed a first device, as shown in Fig. 7, including:
step 71: receiving information on dynamic group sent by an Application Function (AF) device;
step 72: obtaining Policy and Charging Control (PCC) policy information based on the information on dynamic group;
step 73: sending the PCC policy information to a Session Management Function (SMF) device; wherein the first device is a Policy Control Function (PCF) device or a Network Exposure Function (NEF) device; the information on dynamic group includes at least one of indication information or grouping information; the indication information is used to instruct a SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the first dynamic UE group is a UE group determined by the SMF device based on the grouping information; the PCC policy information includes at least one of the indication information or the grouping information.

In the embodiments of the present application, the information processing method comprises: receiving information on dynamic group sent by an Application Function (AF) device; obtaining Policy and Charging Control (PCC) policy information based on the information on dynamic group; and sending the PCC policy information to a Session Management Function (SMF) device; wherein the first device is a Policy Control Function (PCF) device or a Network Exposure Function (NEF) device; the information on dynamic group includes at least one of indication information or grouping information; the indication information is used to instruct a SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the first dynamic UE group is a UE group determined by the SMF device based on the grouping information; the PCC policy information includes at least one of the indication information or the grouping information. It can support information processing for a non-predefined UE group (i.e., a dynamic UE group) to achieve the purpose of reducing interaction delay or enabling traffic steering.

The grouping information includes at least one of the followings: location information of the UE; application information associated with the UE; first time period information; or group identifier associated with the UE.

This ensures an accurate UE grouping.

In the embodiments of the present application, the handling rule indicates at least one of the followings: common EAS address set information; common Domain Name System (DNS) server address information; common Extended DNS (EDNS) client subnet option indication information; or common DNAI information; common L-DN information; or a traffic steering rule.

This can ensure that the common EAS, the common DNAI and/or the common L-DN are accurately discovered for the UEs in the first dynamic UE group, as well as the coordinated UPF and EAS switching, thereby reducing the interaction delay and switching delay on the application server side to ensure service continuity; and can support traffic offloading or traffic steering to the edge for the first dynamic UE group.

Furthermore, the handling rule further indicates: valid time information of the handling rule itself.

This can further ensure the accuracy of the solution.

It should be noted that similar contents can be referred to each other between the information processing method on the SMF device side, the EASDF device side, the AF device side, and the first device side.

The following are examples of the information processing method provided by the embodiments of the present application.

To address the above technical problem, an embodiment of the present application provides an information processing method, which can be specifically implemented as a method supporting the switching of an edge application server and a user plane function (UPF). It mainly involves: for a non-predefined dynamic group of UEs using the same edge service, in order to reduce interaction latency on the application server side, the non-predefined dynamic UE group needs to access the common EAS and/or the common DNAI and/or the common L-DN to use the edge service. In addition, for some reason, it leads to EAS or PSA UPF relocation; then after the switching is triggered, the dynamic UE group still needs to re-discover (i.e., re-access) the common EAS, the common DNAI, and/or the common L-DN (i.e., the common EAS and/or the common DNAI and/or the common L-DN). Based on this requirement, the possible scenario of the solution are as follows:
1. For an application-triggered EAS relocation scenario (e.g., EAS is in congestion or downtime), there are the following two situations:
   1) Triggering PSA UPF relocation and a DNAI change;
   2) Not triggering PSA UPF relocation, for example, PSA UPF supports the common DNAI, or belongs to the common L-DN.
2. For the scenario of PSA relocation and the DNAI change (for example, UPF relocation caused by the UE mobility), there are the following three situations:
   1) Triggering EAS relocation;
   2) Not triggering EAS relocation, for example, EAS supports a different DNAI.
   3) Triggering L-DN change, for example, a source EAS and a target EAS (i.e., the switched EAS) are located in different L-DNs.

In the solution, different UEs establishing different PDU sessions can access the common EAS and/or L-DN through different PSA UPFs.

As shown in Fig. 8, UE1 establishes a PDU session to access EAS1 through PSA UPF1 (supporting a DNAI1), while UE2 and UE3 establish PDU sessions to access EAS2 through PSA UPF2 (supporting a DNAI2). Since both EAS1 and EAS2 are deployed in L-DN1, low-latency interaction on the application server side is ensured.

When EAS1 and EAS2 need to switch to EAS3, or when UE3 moves into the EAS3 service area, then UE1, UE2, and UE3 re-establishes a PDU session to access EAS3 through PSA UPF3.

A common EAS IP address (also referred to as the EAS address) indicates access to the common EAS, a common DNAI indicates access to one or more EASs supporting the DNAI, and a common L-DN indicates access to one or more EASs deployed in the L-DN.

The following provides specific examples illustrating the solution provided by the embodiments of the application.

### Example 1

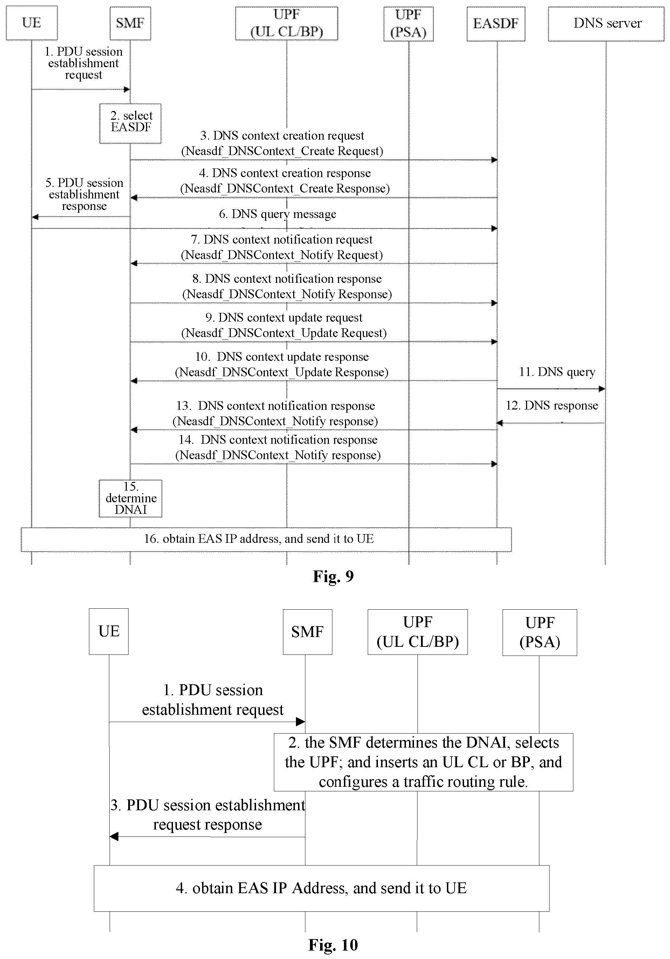

The example introduces how the SMF configures the common DNS server to the EASDF to discover EAS information (such as an EAS IP address); specifically, as shown in Fig. 9, it includes the following steps.

Step 1: the UE sends a PDU session establishment request to the SMF.

Step 2: during the PDU session establishment request process, the SMF selects the EASDF (device).

Step 3: the SMF calls a DNS context creation request (Neasdf_DNSContext_Create Request), and sends information such as UE IP address (UE IP address), Subscription Permanent Identifier (SUPI), a DNN, a notification endpoint, and/or a DNS message handling rule, etc. to the EASDF.

Specifically, the SMF can determine whether the UE initiating the PDU session belongs to a certain dynamic group (corresponding to the above-mentioned first dynamic UE group) based on a SMF local policy and/or a PCC policy provided by the PCF to SMF (corresponding to the above-mentioned grouping trigger information); and generate the corresponding DNS message handling rule to indicate that for UEs belonging to the same dynamic group, the DNS query message initiated by the UE should be sent to the common local DNS server or add indication information (corresponding to the above-mentioned target indication information) through the EDNS client subnet option. For example, in the Forwarding Action, it contains action: when the target FQDN in the DNS query message matches the FQDN set associated with a specific application, it performs: 1) sending the DNS query message to the indicated local DNS server, or, 2) adding indication information through the EDNS client subnet option, indicating a specific IP range. Here, the above 1) and 2) correspond to two scenarios: sending the DNS query message initiated by the UE to the common local DNS server and adding indication information through the EDNS client subnet option, respectively.

Determining the rule for the dynamic group (corresponding to the above-mentioned grouping information) may include:
(1) (UE's) location information, which for example, providing an Area of Interest (AoI), indicating that UEs in the AoI (i.e., a specific Tracking Area or a cell) belong to a (same) dynamic group (corresponding to the UE dynamic group). For another example, the relative positions of different UEs are within a certain distance, and the UEs belong to a dynamic group. For yet another example, the UEs in a specific geographic area belong to a dynamic group.
(2) (UE-associated) application information, such as the UEs using the same Application Identifier set (including one or more Application Identifiers), the same DNN, the same S-NSSAI, and/or the same Fully Qualified Domain Name (FQDN) set (including one or more FQDNs), which belongs to a dynamic group.
(3) It combines the location information and the application information, the UEs that meet both (1) location information and (2) application information belong to a dynamic group.
(4) Time information (corresponding to the above-mentioned first time period information), for example, the UEs that meet (2) application information within a specific time period belong to a dynamic group.
(5) It corresponds to the above-mentioned specific group identifier associated with the UE, for example, the UEs belong to a specific external group identifier, specifically, the UEs associated with both the external group identifier A and the external group identifier B simultaneously, belong to a dynamic group.

Step 4: the EASDF creates a DNS context for the PDU session to store a received UE IP address, DNS message handling rule, and other information. The EASDF then responds to the SMF with the DNS context creation response (Neasdf_DNSContext_Create Response).

Step 5: the SMF includes the IP address of the EASDF as the DNS server address in the PDU session establishment accept message, and sends it to the UE.

Step 6: the UE sends the DNS query message to the EASDF.

Step 7: if the DNS query message matches the DNS message detection template of the DNS message handling rule, the EASDF calls a DNS context notification request (Neasdf_DNSContext_Notify Request) to report the DNS query information (e.g., the target FQDN) to the SMF. The Neasdf_DNSContext_Notify request is reported only when the DNS query matches the DNS message handling rule (i.e., DNS message detection template); in this example, it is assumed that the step needs to be executed by default, but it is not limited to this.

Step 8: the SMF responds to the EASDF with the DNS context notification response (Neasdf_ DNSContext_Notify Response).

Step 9: when the SMF determines that the requested FQDN is associated with the same dynamic group (for example, the requested FQDN is included in a specific FQDN set) based on the received FQDN and the FQDN information received in the PDU session established by another UE, or when the SMF determines that the UE is associated with a dynamic group based on the UE location (for example, the UE moves), it needs to provide the common EAS information (such as the EAS IP address), access the common DNAI, and/or access the common L-DN. Therefore, it needs to update the DNS message handling rule, for example, modifying the Local DNS IP address in the Forwarding Action or adding the common EDNS client subnet option information. The SMF sends the new DNS message handling rule to the EASDF by calling a DNS context update request (Neasdf_DNSContext_Update Request).

This can be understood as: the dynamic UE group is re-determined based on the FQDN, and the DNS message handling rule is updated and sent accordingly. This corresponds to obtaining at least one Fully Qualified Domain Name (FQDN), updating the first dynamic UE group based on the at least one FQDN, updating the DNS message handling rule for the updated first dynamic UE group, and sending the updated DNS message handling rule to the EASDF device.

Step 10: the EASDF responds to the SMF with the DNS context update response (Neasdf_DNSContext_Update Response).

Step 11: the EASDF processes the received DNS query message based on the DNS message handling rule. If the DNS query message sent satisfies the DNS message handling rule, the DNS query message needs to be sent to the common local DNS server or the indication information (corresponding to the above-mentioned target indication information) is added through the EDNS client subnet option. For example, according to the Forwarding Action, when the target FQDN in the DNS query message matches the FQDN set associated with a specific application, it performs: 1) sending the DNS query message to the local DNS server indicated by the SMF, or 2) adding indication information through the EDNS client subnet option, indicating a specific IP range.

Step 12: the EASDF receives EAS information (such as the EAS IP address) determined by the DNS system (DNS server) and includes it in the DNS response sent to the UE.

Step 13: if the EAS information (such as the EAS IP address) or the FQDN in the DNS response matches the DNS message detection template, the EASDF calls Neasdf_DNSContext_Notify request to send the DNS message reporting to the SMF. The reported information (i.e., DNS message reporting) can include multiple pieces of EAS information (such as the EAS IP address) and may also contain the FQDN and the EDNS client subnet option.

Step 14: the SMF saves the EAS information, each PDU session information, and UE information, etc. that belong to the same dynamic group. The SMF responds to the EASDF with Neasdf_DNSContext_Notify Response.

Step 15: the SMF determines the DNAI and N6 routing information, and optionally, performs selection and insertion of UL CL/BP (i.e., UL CL or BP) and local PSA UPF (thereby ensuring that the PDU sessions belonging to the same dynamic group select the common DNAI or access the common EAS set or the common DNAI of the L-DN). Corresponding to the above, the selection and/or insertion of at least one of the Uplink Classifier (UL CL) or Branching Point (BP), or the PDU session anchor UPF is performed based on the handling rule.

Specifically, the SMF determines the DNAI based on the EAS information and each PDU session information, etc. that belong to the same dynamic group (corresponding to above-mentioned configuring the handling rule for the UPF device or the EASDF device based on the first information of at least one UE in the first dynamic UE group), ensuring that the PDU sessions belonging to the same dynamic group select the common DNAI or can access the common EAS set or the common DNAI of the L-DN.

The EAS information can be determined based on the DNS message handling rule.

Step 16: obtaining the EAS information (such as the EAS IP address) and send it to the UE.

Specifically, the known method can be used, where the EASDF sends the DNS response containing the EAS IP address to the UE, which will not be further elaborated herein.

### Example 2

This example introduces how the SMF configures the common EAS information (such as one or more EAS IP addresses) to the EASDF to discover EAS information (such as an EAS IP address). Specifically, there are similarities between this example and Example 1. Based on Example 1, the main differences are as follows.

Step 9: when the SMF determines that the requested FQDN is associated with the same dynamic group (for example, the requested FQDN is included in a specific FQDN set) based on the received FQDN and the FQDN information received in the PDU session established by another UE, it determines that the common EAS information (such as one or more EAS IP addresses) needs to be provided. Then, the SMF updates the DNS message handling rule and includes the EAS information in the DNS message handling rule.

Specifically, the SMF indicates that if the FQDN sent by the UE satisfies the DNS message handling rule, the EAS information (including one or more EAS IP addresses, e.g., multiple EAS IP addresses corresponding to the common DNAI or deployed in the common L-DN) is sent to the corresponding UE through the EASDF. For example, a new action is added to the Forwarding Action: if the target FQDN in the DNS query message matches the FQDN set associated with a specific application, the specific EAS information (such as an EAS IP range including one or more EAS IP addresses) is sent to the UE through the EASDF.

Additionally, the SMF may provide the valid time information (corresponding to the above-mentioned valid time information of the handling rule itself) of the EAS information (such as the EAS IP range), which corresponds to the validity period of the processing rule itself. The valid time information can be an indicator, and is used to indicate that, within the valid time, the EASDF can directly return the EAS information (such as EAS IP) to the UE requesting the corresponding FQDN. When the valid time is exceeded, the EASDF will send a DNS query to the DNS server to re-obtain the resolved EAS information (such as the EAS IP), and return it to the UE. In addition, the valid time information can also be a time length, such as valid time = 1 second, that is, the EASDF can directly return the IP to the UE within 1 second. Corresponding to the above, the EASDF determines the valid time of the handling rule; when the handling rule is within the valid time, the EAS information is sent to at least one UE in the first dynamic UE group based on the handling rule; when the handling rule exceeds the valid period, a DNS query message is sent to the DNS server for at least one UE in the first dynamic UE group; the EAS information fed back by the DNS server is received and sent to at least one UE in the first dynamic UE group.

Specifically, the SMF can send the new DNS message handling rule to the EASDF by calling Neasdf_DNSContext_Update Request.

Step 11: the EASDF processes the received DNS query message based on the DNS message handling rule. For example, according to the Forwarding Action: if the target FQDN in the DNS query message matches the FQDN set associated with a specific application, the EASDF includes the specific EAS information (containing one or more EAS IP addresses) in the DNS response.

Optionally, the EASDF can determine whether to directly feed back the EAS information (such as one or more EAS IP addresses) based on the valid time information or send the DNS query to the DNS server for acquisition. If the SMF does not provide valid time information, the EASDF can determine the valid time based on the local configuration policy (corresponding to the above-mentioned local policy configuration of the EASDF); but not limited to this.

Steps 12-14 in Example 1 are not performed in this example.

Step 16: the EASDF includes the determined EAS information (such as the EAS IP) in the DNS response and sends it to the UE.

Step 15 is the same as that in Example 1.

### Example 3

This example introduces the discovery of EAS information (e.g., an EAS IP address) through a local DNS server, as shown in Fig. 10, it includes the following steps.

Step 1: the UE sends a PDU session establishment request to the SMF.

Step 2: the SMF determines the DNAI, selects the UPF, and inserts a UL CL or BP to configure a traffic routing rule.

Specifically, if the SMF determines that the UE belongs to a specific dynamic UE group based on a received FQDN, UE location information, etc., and based on the method of "determining the rule for the dynamic group" in Example 1, then the DNAI is determined accordingly (e.g., ensuring UEs belonging to a same dynamic group access a common EAS, a common DNAI, and/or a common L-DN). The PSA UPF and the determined DNS server are selected and inserted based on the determined DNAI, to ensure that the dynamic UE group uses a common DNS server. Corresponding to the above, at least one of the following operations is performed according to the handling rule: selecting and/or inserting at least one of an Uplink Classifier (UL CL) or Branching Point (BP), or a PDU session anchor UPF; or determining a DNS server.

Optionally, the SMF determines to insert the UL CL/BP. The SMF configures a rule to the UL CL/BP, including: the SMF configures the traffic routing rule to the UL CL or BP, and provides a common DNS server address (configured to the UL CL) or a same IP prefix (configured to the BP) in the traffic routing rule. Corresponding to the above, according to the handling rule, the traffic routing rule is configured to the UL CL or BP, wherein the IP prefix represents an IP address prefix.

Step 3: the SMF feeds back the PDU session establishment request response to the UE.

Specifically, the SMF includes the common DNS server address in a PDU session establishment accept message, corresponding to the PDU session establishment request response (PDU session establishment accept message) sent to the UE. Alternatively, it can be sent through the PDU session modification process, such as including a local DNS server address in the Protocol Configuration Options (PCO); but it is not limited to this.

Step 4: obtaining the EAS information (such as the EAS IP address) and send it to the UE.

Specifically, the known method can be used to send the EAS information (such as the EAS IP address) obtained through the DNS server resolution to the UE; for example, the UE sends a DNS query request to the DNS server based on the DNS server address; the DNS server obtains the EAS information (e.g., EAS IP address) accordingly and feeds it back to the UE. The specifics are not elaborated further herein.

### Example 4

This example introduces the process that the SMF initiates the rediscovery of EAS information (such as an EAS IP address), which may include the following steps.

Step 1: since the UE is of a (UE) dynamic group associated with a specific application, the SMF can determine that the current PSA UPF cannot support access to a target EAS, a DNAI, and/or an L-DN based on the application identifier associated with the dynamic group, a UE IP of a group member, information of a PDU session established by the group member, EDI, etc., and needs to switch to another PSA UPF, or the EAS IP address needs to be updated. Afterward, the DNAI can be determined based on relevant information of the dynamic group to ensure that the PDU session established by the group member selects a common DNAI or the DNAI that can access a common EAS or the common DNAI of the L-DN. Corresponding to the above, when it is determined that the UPF (including PSA UPF, and/or UL CL/BP UPF) or EAS address corresponding to at least one UE in the first dynamic UE group needs to be replaced, a handling rule is configured for the UPF device or EASDF device according to the first dynamic UE group.

Step 2: the SMF initiates a PDU session modification process.

Specifically, the SMF can select the corresponding PSA UPF based on the DNAI determined in step 1.

Step 3: the SMF sends a PDU session modification command to the UE, and the UE determines whether it needs to rediscover the EAS based on the received information.

### Example 5

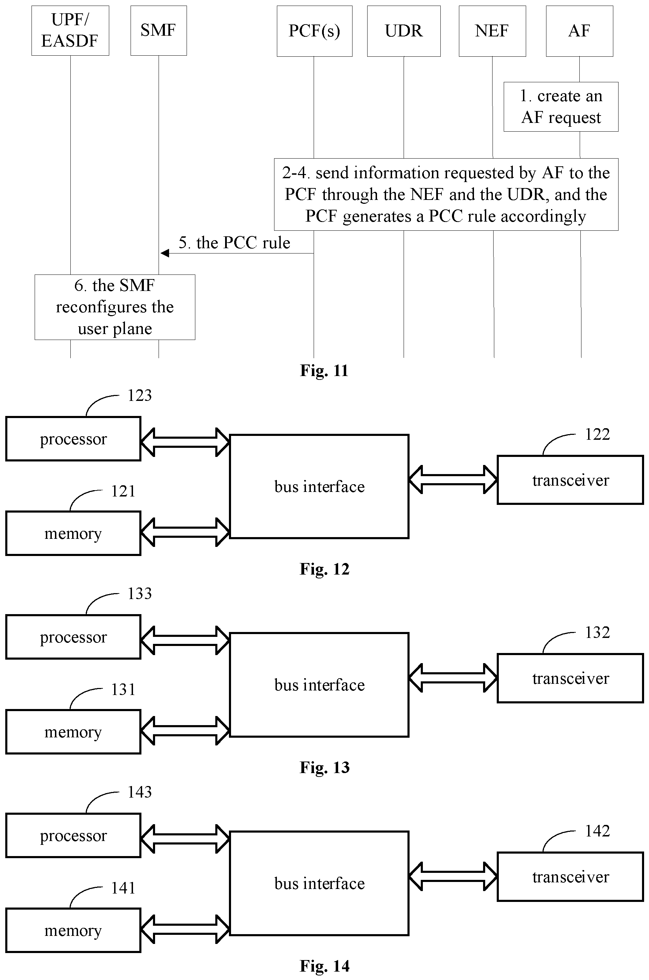

This example introduces an AF indicating that the UE sessions associated with a same application need to access a common EAS, a common DNAI, and/or a common L-DN. Specifically, as shown in Fig. 11, it includes the following steps.

Step 1: the AF creates an AF request, which can also be referred to as AF creation request information.

Specifically, the information on dynamic group may be added in the AF request, which may include one or both of the following types of information.
1) Indication information, which indicates that the UE sessions associated with the same application need to access the common EAS, the common DNAI, and/or the common L-DN (corresponding to the above-mentioned indication information used to instruct a SMF device to configure a handling rule for a UPF device or an EASDF device based on the first dynamic UE group).
2) Indication dynamic group formation rule (corresponding to the above-mentioned grouping information), which may include:
   (1) (UE) location information, which, for example, provides an Area of Interest (AoI), indicating that UEs in the AoI (i.e., a specific tracking area or a cell) belong to a dynamic group. For another example, the relative positions of different UEs are within a certain distance, and the UEs belong to a dynamic group. For yet another example, the UEs in a specific geographic area belong to a dynamic group;
   (2) (UE-associated) application information, for example, the UEs using a same application identifier set (including one or more application identifiers), the same DNN, the same S-NSSAI, and/or the same Fully Qualified Domain Name (FQDN) set (including one or more FQDNs) belong to a dynamic group;
   (3) combining the location information and the application information, the UEs that meet both (1) location information and (2) application information belong to a dynamic group;
   (4) time information (corresponding to the above-mentioned first time period information), such as UEs that meet (2) application information within a specific time period belong to a dynamic group;
   (5) corresponding to the above-mentioned specific group identifier associated with the UE, for example, the UEs belong to a specific external group identifier, specifically, the UEs associated with both external group identifier A and external group identifier B simultaneously, belong to a dynamic group.

Optionally, information on dynamic group can provide application information (if EDI is not provided), including a set of application identifiers associated with the same application (e.g., a set of FQDNs, application IDs), corresponding DNS server information (e.g., DNS IP address), an EAS IP address, etc.

The information on dynamic group is shown on the table below.

| Information Name | Applicable for PCF or NEF | Category |
|---|---|---|
| Information on dynamic group | Indicates the information for determining the dynamic group, and the handling policy (e.g. select common EAS IP range to access common EAS/DNAI/L-DN, or traffic offload to edge) | Optional |

Steps 2-4: the known method can be used, as shown in Fig. 11, to send the AF request information to the PCF through the NEF or the UDR (corresponding to send the information on dynamic group to the first device as mentioned above). The PCF generates a PCC rule accordingly (corresponding to obtain policy and charging control PCC policy information based on the information on dynamic group as mentioned above). The PCC rule may include the indication information and/or dynamic group formation rule.

Step 5: the PCF sends the PCC rule to the SMF (corresponding to send the PCC policy information to the SMF device as mentioned above).

Step 6: the SMF reconfigures the user plane.

Specifically, the SMF may consider the PDU session established by a dynamic group member to select the common DNAI, and correspondingly insert, replace, or remove the UPF, as well as configure a new traffic steering rule to the UPF for the dynamic UE group, corresponding to the above-mentioned traffic steering rule, but it is not limited to this.

Accordingly, the solution provided by the embodiments of the present application involves the following procedures.
1. The SMF determines that the UEs with the same characteristics belong to the same dynamic UE group and configures the rule for the UPF or the EASDF to ensure that the dynamic UE group accesses the common EAS, the common DNAI, and/or the common L-DN, or to ensure traffic steering (corresponding to the above-mentioned enabling traffic steering for the data flow of the first dynamic UE group).
2. Based on 1, the SMF determines that the requested FQDN is associated with the same FQDN set based on the received FQDN and the FQDN information received in the PDU session established by another UE.
3. Based on 2, the SMF updates the configuration rule (DNS message handling rule) to the EASDF accordingly.
4. Based on 2, the SMF configures the rule (i.e., the traffic routing rule) to the UL CL/BP UPF.
5. Based on 1, the SMF determines the DNAI based on the application identifier associated with the dynamic group, a UE IP of a group member, information of a PDU session established by the group member, EDI, etc.
6. New indication information "information on EAS selection" is added in the AF request, indicating that the UE sessions associated with the same application need to access the common EAS, the common DNAI, and/or the common L-DN.

In summary, in embodiments of the present disclosure, in view of the problem that a non-predefined dynamic UE group cannot be ensured to provide low communication delay when the same edge service is used or when the EAS and the PSA UPF are relocated, it proposes to discover or rediscover the common EAS, the common DNAI, and/or the common L-DN for the non-predefined dynamic UE group, as well as coordinated UPF and EAS switching, thereby reducing the interaction delay and switching delay on the application server side to ensure service continuity. In addition, it supports traffic offloading or traffic steering to the edge with respect to the non-predefined dynamic UE group.

In addition, an embodiment of the present application provides an information processing device, which is a Session Management Function (SMF) device. As shown in Fig. 12, it includes a memory 121, a transceiver 122, and a processor 123;
the memory 121 is configured to store a computer program; the transceiver 122 is configured to receive and send data under the control of the processor 123; the processor 123 is configured to read the computer program in the memory 121 and perform the following operations:
determining a first dynamic UE group based on grouping information;
configuring a handling rule for a User Plane Function (UPF) device or an Edge Application Server Discovery Function (EASDF) device based on the first dynamic UE group;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group.

In the embodiment of the present application, the information processing device determines the first dynamic UE group based on the grouping information, configures the handling rule for the UPF device or the EASDF device based on the first dynamic UE group; wherein the processing rule is used to instruct each UE in the first dynamic UE group to access at least one of the common EAS, the common DNAI or the common L-DN; or, enable traffic steering for the data flow of the first dynamic UE group. It can support information processing for a non-predefined UE group (i.e., the dynamic UE group) to achieve the purpose of reducing interaction delay or enabling traffic steering.

Specifically, the transceiver 122 is configured to receive and send data under the control of the processor 123.

In Fig. 12, the bus architecture may include any number of interconnected buses and bridges, and connects various circuits including one or more processors represented by the processor 123 and the memory represented by the memory 121. The bus architecture can also link together various other circuits such as peripherals, voltage regulators, and power management circuits, which are known in the art and therefore will not be described further herein. The bus interface provides the interface. The transceiver 122 may be a plurality of elements, including a transmitter and a receiver, to allow for communication with various other apparatuses on the transmission medium. The transmission medium includes wireless channels, wired channels, optical cables, and other transmission media. The processor 123 is responsible for managing the bus architecture and general processing, and the memory 121 can store data used by the processor 123 when performing operations.

The processor 123 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory 121, the processor 123 is configured to perform any of the methods provided by the embodiments of the present application according to the obtained executable instructions. The processor 123 and the memory 121 can also be physically separated.

The grouping information includes at least one of the followings: location information of the UE; application information associated with the UE; first time period information; or group identifier associated with the UE.

In the implementation of the present application, the handling rule indicates at least one of the followings: common EAS address set information; common Domain Name System (DNS) server address information; common Extended DNS (EDNS) client subnet option indication information; common DNAI information; common L-DN information; or a traffic steering rule.

The determining the first dynamic UE group based on the grouping information includes: determining the grouping information based on grouping trigger information; determining the first dynamic UE group based on the grouping information.

In the implementation of the present application, the grouping trigger information includes at least one of the followings: local policy information; or Policy and Charging Control (PCC) policy information provided by a Policy Control Function (PCF) device.

The grouping trigger information includes at least one of: indication information or the grouping information; wherein the indication information is used to instruct the SMF device to configure the handling rule for the UPF device or the EASDF device based on the first dynamic UE group.

In the implementation of the present application, configuring the handling rule for the UPF device or the EASDF device based on the first dynamic UE group includes: in the case it is determined that the UPF or EAS address corresponding to at least one UE in the first dynamic UE group needs to be replaced, configuring the handling rule for the UPF device or the EASDF device based on the first dynamic UE group.

Configuring the handling rule for the UPF device or the EASDF device based on the first dynamic UE group includes: generating a corresponding DNS message handling rule for the first dynamic UE group; sending the DNS message handling rule to the EASDF device; wherein the DNS message handling rule is used to indicate: for at least one UE in the first dynamic UE group, a DNS query message initiated by the at least one UE is sent to a common local DNS server or target indication information is added through the EDNS client subnet option; the target indication information is used to indicate a target Internet Protocol (IP) range.

In the implementation of the present application, configuring the handling rule for the UPF device or the EASDF device based on the first dynamic UE group further includes: obtaining at least one Fully Qualified Domain Name (FQDN); updating the first dynamic UE group based on the at least one FQDN; updating the DNS message handling rule for an updated first dynamic UE group; sending an updated DNS message handling rule to the EASDF device.

Configuring the handling rule for the UPF device or the EASDF device based on the first dynamic UE group includes: configuring the handling rule for the UPF device or the EASDF device based on first information of at least one UE in the first dynamic UE group; wherein the first information includes at least one of the followings: EAS information; or Protocol Data Unit (PDU) session information.

In the implementation of the present application, the handling rule further indicates: valid time information of the handling rule itself.

Furthermore, the operation of the information processing device also includes: after configuring the handling rule for the UPF device or the EASDF device based on the first dynamic UE group, at least one of the following operations is performed based on the handling rule: performing selection and/or insertion of at least one of an Uplink Classifier (UL CL) or Branching Point (BP), or a PDU session anchor UPF; or determining a DNS server.

In the implementation of the present application, the operation of the information processing device also includes: after configuring the handling rule for the UPF device or the EASDF device based on the first dynamic UE group, configuring a traffic routing rule to the UL CL or BP based on the handling rule; wherein the traffic routing rule indicates that the UL CL is configured with common DNS server address, or the BP is configured with a same IP address prefix.

It should be noted that the above-mentioned device provided by the embodiments of the present application can implement all the method steps implemented by the above-mentioned information processing method embodiments on the SMF device side, and can achieve the same technical effect. The parts and beneficial effects of the embodiments that are the same as the method embodiments will not be described in detail.

In addition, an embodiment of the present application provides an information processing device, which is an Edge Application Server Discovery Function (EASDF) device, as shown in Fig. 13, including a memory 131, a transceiver 132, and a processor 133;
the memory 131 is configured to store a computer program; the transceiver 132 is configured to receive and send data under the control of the processor 133; the processor 133 is configured to read the computer program in the memory 131 and perform the following operations:
receiving a handling rule sent by a Session Management Function (SMF) device through the transceiver 132;
processing a Domain Name System (DNS) query message based on the handling rule;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the handling rule is a rule configured for a User Plane Function (UPF) device or an EASDF device;
the first dynamic UE group is a UE group determined by the SMF device based on grouping information.

The information processing device provided by the embodiments of the present application receives a handling rule sent by a Session Management Function (SMF) device; processes a Domain Name System (DNS) query message based on the handling rule; wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the handling rule is a rule configured for a User Plane Function (UPF) device or an EASDF device; the first dynamic UE group is a UE group determined by the SMF device based on grouping information. It can support information processing for a non-predefined UE group (i.e., a dynamic UE group) to achieve the purpose of reducing interaction delay or enabling traffic steering.

Specifically, the transceiver 132 is configured to receive and send data under the control of the processor 133.

In Fig. 13, the bus architecture may include any number of interconnected buses and bridges, and connects various circuits including one or more processors represented by the processor 133 and the memory represented by the memory 131. The bus architecture can also link together various other circuits such as peripherals, voltage regulators, and power management circuits, which are known in the art and therefore will not be described further herein. The bus interface provides the interface. The transceiver 132 may be a plurality of elements, including a transmitter and a receiver, to allow for communication with various other apparatuses on the transmission medium. The transmission medium includes wireless channels, wired channels, optical cables, and other transmission media. The processor 133 is responsible for managing the bus architecture and general processing, and the memory 131 can store data used by the processor 133 when performing operations.

The processor 133 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory 131, the processor 133 is configured to perform any of the methods provided by the embodiments of the present application according to the obtained executable instructions. The processor 133 and the memory 131 can also be physically separated.

The grouping information includes at least one of the followings: location information of the UE; application information associated with the UE; first time period information; or group identifier associated with the UE.

In the implementation of the present application, receiving the handling rule sent by the SMF device includes: receiving a DNS message handling rule sent by the SMF device; wherein the DNS message handling rule is used to indicate: for at least one UE in the first dynamic UE group, a DNS query message initiated by the at least one UE is sent to a common local DNS server or target indication information is added through an Extended DNS (EDNS) client subnet option; the target indication information is used to indicate a target Internet Protocol (IP) range.

Receiving the handling rule sent by the SMF device further includes: receiving an updated DNS message handling rule sent by the SMF device.

In the implementation of the present application, the handling rule indicates at least one of the followings: common EAS address set information; common DNS server address information; common EDNS client subnet option indication information; common DNAI information; common L-DN information; or a traffic steering rule.

Furthermore, the operation of the information processing device also includes: after receiving the handling rule sent by the SMF device, determining valid time of the handling rule; when the handling rule is within the valid time, sending EAS information to at least one UE in the first dynamic UE group through the transceiver based on the handling rule; when the handling rule exceeds the valid time, sending a DNS query message corresponding to at least one UE in the first dynamic UE group to the DNS server through the transceiver; receiving the EAS information fed back by the DNS server through the transceiver, and sending the EAS information to at least one UE in the first dynamic UE group.

In the implementation of the present application, determining the valid time of the handling rule includes: determining the valid time of the handling rule based on local policy configuration or valid time information carried by the handling rule.

It should be noted that the above-mentioned device provided by the embodiments of the present application can implement all the method steps implemented by the above-mentioned information processing method embodiments on the EASDF device side, and can achieve the same technical effect. The parts and beneficial effects of the embodiments that are the same as the method embodiments will not be described in detail.

In addition, an embodiment of the present application provides an information processing device, which is an Application Function (AF) device, as shown in Fig. 14, including a memory 141, a transceiver 142, and a processor 143;
the memory 143 is configured to store a computer program; the transceiver 142 is configured to receive and send data under the control of the processor 143; the processor 143 is configured to read the computer program in the memory 141 and perform the following operations:
sending information on dynamic group to a first device through the transceiver 142, wherein the first device is a Policy Control Function (PCF) device or a Network Exposure Function (NEF) device;
wherein the information on dynamic group includes at least one of indication information or grouping information;
the indication information is used to instruct a Session Management Function (SMF) device to configure a handling rule for a User Plane Function (UPF) device or an Edge Application Server Discovery Function (EASDF) device based on a first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by a SMF device based on the grouping information.

The information processing device provided by the embodiments of the present application sends information on dynamic group to a first device, wherein the first device is a Policy Control Function (PCF) device or a Network Exposure Function (NEF) device; wherein the information on dynamic group includes at least one of indication information or grouping information; the indication information is used to instruct a Session Management Function (SMF) device to configure a handling rule for a User Plane Function (UPF) device or an Edge Application Server Discovery Function (EASDF) device based on a first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the first dynamic UE group is a UE group determined by a SMF device based on the grouping information. It can support information processing for a non-predefined UE group (i.e., a dynamic UE group) to achieve the purpose of reducing interaction delay or enabling traffic steering.

Specifically, the transceiver 142 is configured to receive and send data under the control of the processor 143.

In Fig. 14, the bus architecture may include any number of interconnected buses and bridges, and connects various circuits including one or more processors represented by the processor 143 and the memory represented by the memory 141. The bus architecture can also link together various other circuits such as peripherals, voltage regulators, and power management circuits, which are known in the art and therefore will not be described further herein. The bus interface provides the interface. The transceiver 142 may be a plurality of elements, including a transmitter and a receiver, to allow for communication with various other apparatuses on the transmission medium. The transmission medium includes wireless channels, wired channels, optical cables, and other transmission media. The processor 143 is responsible for managing the bus architecture and general processing, and the memory 141 can store data used by the processor 143 when performing operations.

The processor 143 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory 141, the processor 143 is configured to perform any of the methods provided by the embodiments of the present application according to the obtained executable instructions. The processor 143 and the memory 141 can also be physically separated.

The grouping information includes at least one of the followings: location information of the UE; application information associated with the UE; first time period information; or group identifier associated with the UE.

In the implementation of the present application, the handling rule indicates at least one of the followings: common EAS address set information; common Domain Name System (DNS) server address information; common Extended DNS (EDNS) client subnet option indication information; common DNAI information; common L-DN information; or a traffic steering rule.

Furthermore, the handling rule further indicates: valid time information of the handling rule itself.

It should be noted that the above-mentioned device provided by the embodiments of the present application can implement all the method steps implemented by the above-mentioned information processing method embodiments on the AF device side, and can achieve the same technical effect. The parts and beneficial effects of the embodiments that are the same as the method embodiments will not be described in detail.

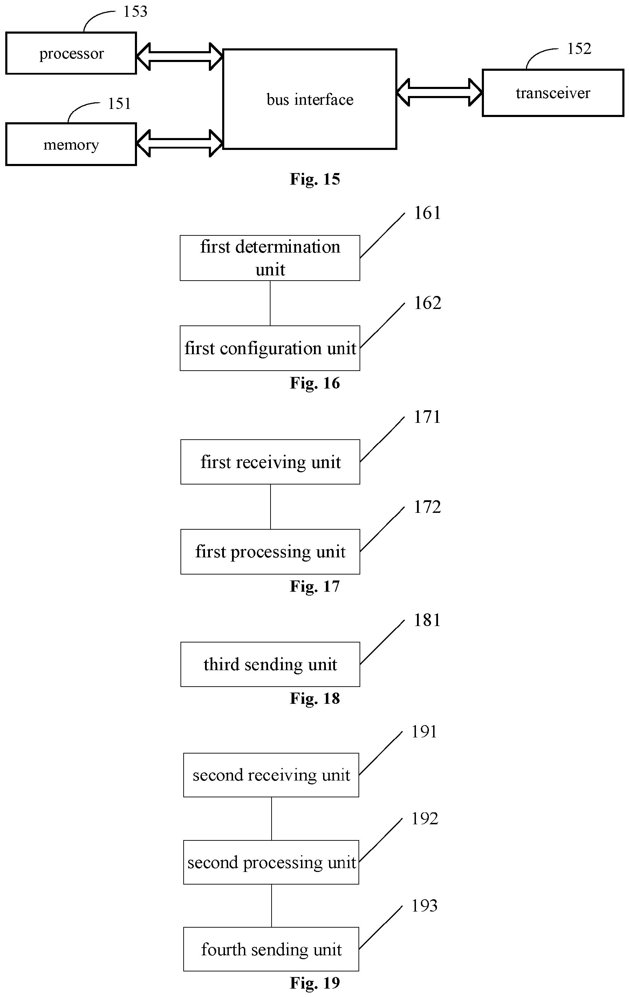

In addition, an embodiment of the present application provides an information processing device, which is a first device, as shown in Fig. 15, including a memory 151, a transceiver 152, and a processor 153;
the memory 151 is configured to store a computer program; the transceiver 152 is configured to receive and send data under the control of the processor 153; the processor 153 is configured to read the computer program in the memory 151 and perform the following operations:
receiving information on dynamic group sent by an Application Function (AF) device through the transceiver 152;
obtaining Policy and Charging Control (PCC) policy information based on the information on dynamic group;
sending the PCC policy information to a Session Management Function (SMF) device through the transceiver 152;
wherein the first device is a Policy Control Function (PCF) device or a Network Exposure Function (NEF) device;
the information on dynamic group includes at least one of indication information or grouping information;
the indication information is used to instruct a SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by the SMF device based on the grouping information;
the PCC policy information includes at least one of the indication information or the grouping information.

The information processing device provided by the embodiments of the present application receives information on dynamic group sent by an Application Function (AF) device; obtains Policy and Charging Control (PCC) policy information based on the information on dynamic group; and sends the PCC policy information to a Session Management Function (SMF) device; wherein the first device is a Policy Control Function (PCF) device or a Network Exposure Function (NEF) device; the information on dynamic group includes at least one of indication information or grouping information; the indication information is used to instruct a SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the first dynamic UE group is a UE group determined by the SMF device based on the grouping information; the PCC policy information includes at least one of the indication information or the grouping information. It can support information processing for a non-predefined UE group (i.e., a dynamic UE group) to achieve the purpose of reducing interaction delay or enabling traffic steering.

Specifically, the transceiver 152 is configured to receive and send data under the control of the processor 153.

In Fig. 15, the bus architecture may include any number of interconnected buses and bridges, and connects various circuits including one or more processors represented by the processor 153 and the memory represented by the memory 151. The bus architecture can also link together various other circuits such as peripherals, voltage regulators, and power management circuits, which are all well known in the art and therefore will not be described further herein. The bus interface provides the interface. The transceiver 152 may be a plurality of elements, including a transmitter and a receiver, to allow for communication with various other apparatuses on the transmission medium. The transmission medium includes wireless channels, wired channels, optical cables, and other transmission media. The processor 153 is responsible for managing the bus architecture and general processing, and the memory 151 can store data used by the processor 153 when performing operations.

The processor 153 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory 151, the processor 153 is configured to perform any of the methods provided by the embodiments of the present application according to the obtained executable instructions. The processor 153 and the memory 151 can also be physically separated.

The grouping information includes at least one of the followings: location information of the UE; application information associated with the UE; first time period information; or group identifier associated with the UE.

In the implementation of the present application, the handling rule indicates at least one of the followings: common EAS address set information; common Domain Name System (DNS) server address information; common Extended DNS (EDNS) client subnet option indication information; common DNAI information; common L-DN information; or a traffic steering rule.

Furthermore, the handling rule further indicates: valid time information of the handling rule itself.

It should be noted that the above-mentioned device provided by the embodiments of the present application can implement all the method steps implemented by the above-mentioned information processing method embodiments on the first device side, and can achieve the same technical effect. The parts and beneficial effects of the embodiments that are the same as the method embodiments will not be described in detail.

In addition, an embodiment of the present application provides an information processing apparatus, which is applied to a Session Management Function (SMF) device, as shown in Fig. 16, including:
a first determination unit 161 configured for determining a first dynamic UE group based on grouping information;
a first configuration unit 162 configured for configuring a handling rule for a User Plane Function (UPF) device or an Edge Application Server Discovery Function (EASDF) device based on the first dynamic UE group;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group.

The information processing apparatus provided by the embodiments of the present application determines the first dynamic UE group based on the grouping information; configures the handling rule for the UPF device or the EASDF device based on the first dynamic UE group; wherein the processing rule is used to instruct each UE in the first dynamic UE group to access at least one of the common EAS, the common DNAI or the common L-DN; or, enable traffic steering for the data flow of the first dynamic UE group. It can support information processing for a non-predefined UE group (i.e., the dynamic UE group) to achieve the purpose of reducing interaction delay or enabling traffic steering.

The grouping information includes at least one of the followings: location information of the UE; application information associated with the UE; first time period information; or group identifier associated with the UE.

In the implementation of the present application, the handling rule indicates at least one of the followings: common EAS address set information; common Domain Name System (DNS) server address information; common Extended DNS (EDNS) client subnet option indication information; common DNAI information; common L-DN information; or a traffic steering rule.

Determining the first dynamic UE group based on the grouping information includes: determining the grouping information based on grouping trigger information; determining the first dynamic UE group based on the grouping information.

In the implementation of the present application, the grouping trigger information includes at least one of the followings: local policy information; or Policy and Charging Control (PCC) policy information provided by a Policy Control Function (PCF) device.

The grouping trigger information includes at least one of: indication information or the grouping information; wherein the indication information is used to instruct the SMF device to configure the handling rule for the UPF device or the EASDF device based on the first dynamic UE group.

In the implementation of the present application, configuring the handling rule for the UPF device or the EASDF device based on the first dynamic UE group includes: in the case it is determined that the UPF or EAS address corresponding to at least one UE in the first dynamic UE group needs to be replaced, configuring the handling rule for the UPF device or the EASDF device based on the first dynamic UE group.

Configuring the handling rule for the UPF device or the EASDF device based on the first dynamic UE group includes: generating a corresponding DNS message handling rule for the first dynamic UE group; sending the DNS message handling rule to the EASDF device; wherein the DNS message handling rule is used to indicate: for at least one UE in the first dynamic UE group, a DNS query message initiated by the at least one UE is sent to a common local DNS server or target indication information is added through the EDNS client subnet option; the target indication information is used to indicate a target Internet Protocol (IP) range.

Configuring the handling rule for the UPF device or the EASDF device based on the first dynamic UE group further includes: obtaining at least one Fully Qualified Domain Name (FQDN); updating the first dynamic UE group based on the at least one FQDN; updating the DNS message handling rule for an updated first dynamic UE group; sending an updated DNS message handling rule to the EASDF device.

In the implementation of the present application, configuring the handling rule for the UPF device or the EASDF device based on the first dynamic UE group includes: configuring the handling rule for the UPF device or the EASDF device based on first information of at least one UE in the first dynamic UE group; wherein the first information includes at least one of the followings: EAS information; or Protocol Data Unit (PDU) session information.

The handling rule further indicates: valid time information of the handling rule itself.

Furthermore, the information processing apparatus also includes: a first execution unit, which is used, after configuring the handling rule for the UPF device or the EASDF device based on the first dynamic UE group, to perform at least one of the following operations based on the handling rule: performing selection and/or insertion of at least one of an Uplink Classifier (UL CL) or Branching Point (BP), or a PDU session anchor UPF; or determining a DNS server.

The information processing apparatus also includes: a second configuration unit, which is used, after configuring the handling rule for the UPF device or the EASDF device based on the first dynamic UE group, to configure a traffic routing rule to the UL CL or BP based on the handling rule; wherein the traffic routing rule indicates that the UL CL is configured with common DNS server address, or the BP is configured with a same IP address prefix.

It should be noted here that the above-mentioned apparatus provided by the embodiments of the present application can implement all the method steps implemented by the above-mentioned information processing method embodiments on the SMF device side, and can achieve the same technical effect. The parts and beneficial effects of the embodiments that are the same as the method embodiments will not be described in detail.

An embodiment of the present application also provides an information processing apparatus, which is applied to an Edge Application Server Discovery Function (EASDF) device, as shown in Fig. 17, including:
a first receiving unit 171, configured to receive a handling rule sent by a Session Management Function (SMF) device;
a first processing unit 172, configured to process a Domain Name System (DNS) query message based on the handling rule;
wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the handling rule is a rule configured for a User Plane Function (UPF) device or the EASDF device;
the first dynamic UE group is a UE group determined by the SMF device based on grouping information.

The information processing apparatus provided by the embodiments of the present application receives a handling rule sent by a Session Management Function (SMF) device; processes a Domain Name System (DNS) query message based on the handling rule; wherein the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the handling rule is a rule configured for a User Plane Function (UPF) device or an EASDF device; the first dynamic UE group is a UE group determined by the SMF device based on grouping information. It can support information processing for a non-predefined UE group (i.e., a dynamic UE group) to achieve the purpose of reducing interaction delay or enabling traffic steering.

The grouping information includes at least one of the followings: location information of the UE; application information associated with the UE; first time period information; or group identifier associated with the UE.

In the implementation of the present application, receiving the handling rule sent by the SMF device includes: receiving a DNS message handling rule sent by the SMF device; wherein the DNS message handling rule is used to indicate: for at least one UE in the first dynamic UE group, a DNS query message initiated by the at least one UE is sent to a common local DNS server or target indication information is added through an Extended DNS (EDNS) client subnet option; the target indication information is used to indicate a target Internet Protocol (IP) range.

Receiving the handling rule sent by the SMF device further includes: receiving an updated DNS message handling rule sent by the SMF device.

In the implementation of the present application, the handling rule indicates at least one of the followings: common EAS address set information; common Domain Name System (DNS) server address information; common Extended DNS (EDNS) client subnet option indication information; common DNAI information; common L-DN information; or a traffic steering rule.

In addition, the information processing apparatus further includes: a second determination unit, configured to determine the valid time of the handling rule after receiving the handling rule sent by the SMF device; a first sending unit, configured to send the EAS information to at least one UE in the first dynamic UE group based on the handling rule when the handling rule is within the valid time; a second sending unit, configured to send a DNS query message corresponding to at least one UE in the first dynamic UE group to the DNS server when the handling rule exceeds the valid time; a first transceiver unit, configured to receive the EAS information fed back by the DNS server and send it to at least one UE in the first dynamic UE group.

Determining the valid time of the handling rule includes: determining the valid time of the handling rule based on local policy configuration or valid time information carried by the handling rule.

It should be noted here that the above-mentioned apparatus provided by the embodiments of the present application can implement all the method steps implemented by the above-mentioned information processing method embodiments on the EASDF device side, and can achieve the same technical effect. The parts and beneficial effects of the embodiments that are the same as the method embodiments will not be described in detail.

In addition, an embodiment of the present application provides an information processing apparatus, which is applied to an Application Function (AF) device, as shown in Fig. 18, including:
a third sending unit 181, configured to send information on dynamic group to a first device, wherein the first device is a Policy Control Function (PCF) device or a Network Exposure Function (NEF) device;
wherein the information on dynamic group includes at least one of indication information or grouping information;
the indication information is used to instruct a Session Management Function (SMF) device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by the SMF device based on the grouping information.

The information processing apparatus provided by the embodiments of the present application sends information on dynamic group to a first device, wherein the first device is a Policy Control Function (PCF) device or a Network Exposure Function (NEF) device; wherein the information on dynamic group includes at least one of indication information or grouping information; the indication information is used to instruct a Session Management Function (SMF) device to configure a handling rule for a User Plane Function (UPF) device or an Edge Application Server Discovery Function (EASDF) device based on a first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the first dynamic UE group is a UE group determined by a SMF device based on the grouping information. It can support information processing for a non-predefined UE group (i.e., a dynamic UE group) to achieve the purpose of reducing interaction delay or enabling traffic steering.

The grouping information includes at least one of the followings: location information of the UE; application information associated with the UE; first time period information; or group identifier associated with the UE.

In the implementation of the present application, the handling rule indicates at least one of the followings: common EAS address set information; common Domain Name System (DNS) server address information; common Extended DNS (EDNS) client subnet option indication information; common DNAI information; common L-DN information; or a traffic steering rule.

Furthermore, the handling rule further indicates: valid time information of the handling rule itself.

It should be noted that the above-mentioned apparatus provided by the embodiments of the present application can implement all the method steps implemented by the above-mentioned information processing method embodiments on the AF device side, and can achieve the same technical effect. The parts and beneficial effects of the embodiments that are the same as the method embodiments will not be described in detail.

In addition, an embodiment of the present application provides an information processing apparatus, which is applied to a first device, as shown in Fig. 19, including:
a second receiving unit 191, configured to receive information on dynamic group sent by Application Function (AF) device;
a second processing unit 192, configured to obtain Policy and Charging Control (PCC) policy information based on the information on dynamic group;
a fourth sending unit 193, configured to send the PCC policy information to a Session Management Function (SMF) device;
wherein the first device is a Policy Control Function (PCF) device or a Network Exposure Function (NEF) device;
the information on dynamic group includes at least one of indication information or grouping information;
the indication information is used to instruct the SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group;
the first dynamic UE group is a UE group determined by the SMF device based on the grouping information;
the PCC policy information includes at least one of the indication information or the grouping information.

The information processing apparatus provided by the embodiments of the present application receives information on dynamic group sent by an Application Function (AF) device; obtains Policy and Charging Control (PCC) policy information based on the information on dynamic group; and sends the PCC policy information to a Session Management Function (SMF) device; wherein the first device is a Policy Control Function (PCF) device or a Network Exposure Function (NEF) device; the information on dynamic group includes at least one of indication information or grouping information; the indication information is used to instruct a SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN), or, enable traffic steering for a data flow of the first dynamic UE group; the first dynamic UE group is a UE group determined by the SMF device based on the grouping information; the PCC policy information includes at least one of the indication information or the grouping information. It can support information processing for a non-predefined UE group (i.e., a dynamic UE group) to achieve the purpose of reducing interaction delay or enabling traffic steering.

The grouping information includes at least one of the followings: location information of the UE; application information associated with the UE; first time period information; or group identifier associated with the UE.

In the implementation of the present application, the handling rule indicates at least one of the followings: common EAS address set information; common Domain Name System (DNS) server address information; common Extended DNS (EDNS) client subnet option indication information; common DNAI information; common L-DN information; or a traffic steering rule.

Furthermore, the handling rule further indicates: valid time information of the handling rule itself.

It should be noted that the above-mentioned apparatus provided by the embodiments of the present application can implement all the method steps implemented by the above-mentioned information processing method embodiments on the first device side, and can achieve the same technical effect. The parts and beneficial effects of the embodiments that are the same as the method embodiments will not be described in detail.

It should be noted that the division of units in the embodiments of the present application is schematic and is only a logical function division. In actual implementation, there may be other division methods. In addition, each functional unit in various embodiments of the present application may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: U disk, removable hard disk, Read-Only Memory (ROM), Random Access Memory (RAM), magnetic disk or optical disc and other media that can store program code.

An embodiment of the present application also provides a processor-readable storage medium storing a computer program, wherein the computer program is used to cause a processor to execute the information processing method on the Session Management Function (SMF) device side; or, the computer program is used to cause a processor to execute the information processing method on the Edge Application Server Discovery Function (EASDF) device side; or, the computer program is used to cause a processor to execute the information processing method on the Application Function (AF) device side; or, the computer program is used to cause a processor to execute the information processing method on the first device side.

The processor-readable storage medium may be any available media or data storage device that the processor can access, including but not limited to magnetic storage (such as floppy disks, hard disks, magnetic tapes, Magneto-Optical disks (MO)), optical storage (such as Compact Disc (CD), Digital Versatile Disc (DVD), Blu-ray Disc (BD), High-definition Versatile Disc (HVD)), and semiconductor memories (such as Read-Only Memory (ROM), Erasable Programmable ROM (EPROM), Electrically Erasable Programmable ROM (EEPROM), non-volatile memory (NAND FLASH), Solid State Disk (SSD)), etc.

The embodiments of the information processing method on the above-mentioned SMF device side, the EASDF device side, the AF device side or the first device side are all applicable to the embodiments of the processor-readable storage medium, and can also achieve the same technical effect.

Those skilled in the art will appreciate that embodiments of the present application may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) including computer-usable program codes.

The present disclosure has been described with reference to flow diagrams and/or block diagrams of methods, devices (systems), and computer program products according to embodiments of the present application. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow diagram flow or flows and/or block diagram block or blocks.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a certain module can be a separate processing element, or it can be integrated and implemented in a chip of the above-mentioned device. In addition, it can also be stored in the memory of the above-mentioned apparatus in the form of program codes, and called by a processing element of the above-mentioned apparatus to execute the functions of the modules identified above. The implementation of other modules is similar. In addition, all or part of these modules can be integrated together or implemented independently. The processing element described here may be an integrated circuit with signal processing capabilities. During the implementation process, each step of the above method or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processor, DSP), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of this disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A and B" in the specification and claims should be understood to mean "A alone, B alone, or both A and B exist."

Obviously, those skilled in the art can make various changes and modifications to the present application without departing from the spirit and scope of the application. In this way, if these modifications and variations of the present application fall within the scope of the claims of the present application and equivalent thereof, the present application is also intended to include these modifications and variations.

## Claims

1. An information processing method performed by a Session Management Function (SMF) device, comprising:
determining a first dynamic UE group based on grouping information;
configuring a handling rule for a User Plane Function (UPF) device or an Edge Application Server Discovery Function (EASDF) device based on the first dynamic UE group;
wherein the handling rule is used to instruct each UE in the first dynamic UE group to access at least one of a common Edge Application Server (EAS), a common Data Network Access Identifier (DNAI), or a common Local Data Network (L-DN).

2. The information processing method according to claim 1, wherein the grouping information comprises at least one of the followings:
location information of the UE;
application information associated with the UE;
first time period information; or
group identifier associated with the UE.

3. The information processing method according to claim 1, wherein the handling rule indicates at least one of the followings:
common EAS address set information;
common Domain Name System (DNS) server address information;
common Extended DNS (EDNS) client subnet option indication information; or
common DNAI information.

4. The information processing method according to claim 1, wherein determining the first dynamic UE group based on the grouping information comprises:
determining the grouping information based on grouping trigger information;
determining the first dynamic UE group based on the grouping information.

5. The information processing method according to claim 4, wherein the grouping trigger information comprises at least one of the followings:
local policy information; or
Policy and Charging Control (PCC) policy information provided by a Policy Control Function (PCF) device.

6. The information processing method according to claim 4, wherein the grouping trigger information comprises at least one of: indication information or the grouping information;
wherein the indication information is used to instruct the SMF device to configure the handling rule for the UPF device or the EASDF device based on the first dynamic UE group.

7. The information processing method according to claim 1, wherein configuring the handling rule for the UPF device or the EASDF device based on the first dynamic UE group comprises:
in the case it is determined that the UPF or EAS address corresponding to at least one UE in the first dynamic UE group needs to be replaced, configuring the handling rule for the UPF device or the EASDF device based on the first dynamic UE group.

8. The information processing method according to claim 1, wherein configuring the handling rule for the UPF device or the EASDF device based on the first dynamic UE group comprises:
generating a corresponding DNS message handling rule for the first dynamic UE group;
sending the DNS message handling rule to the EASDF device;
wherein the DNS message handling rule is used to indicate: for at least one UE in the first dynamic UE group, a DNS query message initiated by the at least one UE is sent to a common local DNS server or target indication information is added through the EDNS client subnet option;
the target indication information is used to indicate a target Internet Protocol (IP) range.

9. The information processing method according to claim 8, wherein configuring the handling rule for the UPF device or the EASDF device based on the first dynamic UE group further comprises:
obtaining at least one Fully Qualified Domain Name (FQDN);
updating the first dynamic UE group based on the at least one FQDN;
updating the DNS message handling rule for an updated first dynamic UE group;
sending an updated DNS message handling rule to the EASDF device.

10. The information processing method according to claim 1 or 3, wherein configuring the handling rule for the UPF device or the EASDF device based on the first dynamic UE group comprises:
configuring the handling rule for the UPF device or the EASDF device based on first information of at least one UE in the first dynamic UE group;
wherein the first information comprises at least one of the followings:
EAS information; or
Protocol Data Unit (PDU) session information.

11. The information processing method according to claim 3, wherein the handling rule further indicates: valid time information of the handling rule itself.

12. The information processing method according to claim 1 or 3, wherein after configuring the handling rule for the UPF device or the EASDF device based on the first dynamic UE group, the information processing method further comprises:
performing at least one of the following operations based on the handling rule:
performing selection and/or insertion of at least one of an Uplink Classifier (UL CL) or Branching Point (BP), or a PDU session anchor UPF; or
determining a DNS server.

13. The information processing method according to claim 1 or 3, wherein after configuring the handling rule for the UPF device or the EASDF device based on the first dynamic UE group, the information processing method further comprises:
configuring a traffic routing rule to the UL CL or BP based on the handling rule;
wherein the traffic routing rule indicates that the UL CL is configured with common DNS server address, or the BP is configured with a same IP address prefix.

14. An information processing method performed by an Edge Application Server Discovery Function (EASDF) device, comprising:
receiving a handling rule sent by a Session Management Function (SMF) device;
processing a Domain Name System (DNS) query message based on the handling rule;
wherein the handling rule is used to instruct each UE in the first dynamic UE group to access at least one of a common Edge Application Server (EAS), a common Data Network Access Identifier (DNAI), or a common Local Data Network (L-DN);
the handling rule is a rule configured for a User Plane Function (UPF) device or an EASDF device;
the first dynamic UE group is a UE group determined by the SMF device based on grouping information.

15. The information processing method according to claim 14, wherein the grouping information comprises at least one of the followings:
location information of the UE;
application information associated with the UE;
first time period information; or
group identifier associated with the UE.

16. The information processing method according to claim 14, wherein receiving the handling rule sent by the SMF device comprises:
receiving a DNS message handling rule sent by the SMF device;
wherein the DNS message handling rule is used to indicate: for at least one UE in the first dynamic UE group, a DNS query message initiated by the at least one UE is sent to a common local DNS server or target indication information is added through an Extended DNS (EDNS) client subnet option;
the target indication information is used to indicate a target Internet Protocol (IP) range.

17. The information processing method according to claim 14, wherein receiving the handling rule sent by the SMF device further comprises:
receiving an updated DNS message handling rule sent by the SMF device.

18. The information processing method according to claim 14, wherein the handling rule indicates at least one of the followings:
common EAS address set information;
common DNS server address information;
common EDNS client subnet option indication information; or
common DNAI information.

19. The information processing method according to claim 18, wherein after receiving the handling rule sent by the SMF device, the information processing method further comprises:
determining valid time of the handling rule;
when the handling rule is within the valid time, sending EAS information to at least one UE in the first dynamic UE group based on the handling rule;
when the handling rule exceeds the valid time, sending a DNS query message corresponding to at least one UE in the first dynamic UE group to the DNS server;
receiving the EAS information fed back by the DNS server, and sending the EAS information to at least one UE in the first dynamic UE group.

20. The information processing method according to claim 19, wherein determining the valid time of the handling rule comprises:
determining the valid time of the handling rule based on local policy configuration or valid time information carried by the handling rule.

21. An information processing method performed by an Application Function (AF) device, comprising:
sending information on dynamic group to a first device, wherein the first device is a Policy Control Function (PCF) device or a Network Exposure Function (NEF) device;
wherein the information on dynamic group comprises at least one of indication information or grouping information;
the indication information is used to instruct a Session Management Function (SMF) device to configure a handling rule for a User Plane Function (UPF) device or an Edge Application Server Discovery Function (EASDF) device based on a first dynamic UE group; the handling rule is used to instruct each UE in the first dynamic UE group to access at least one of a common Edge Application Server (EAS), a common Data Network Access Identifier (DNAI), or a common Local Data Network (L-DN);
the first dynamic UE group is a UE group determined by a SMF device based on the grouping information.

22. The information processing method according to claim 21, wherein the grouping information comprises at least one of the followings:
location information of the UE;
application information associated with the UE;
first time period information; or
group identifier associated with the UE.

23. The information processing method according to claim 21, wherein the handling rule indicates at least one of the followings:
common EAS address set information;
common Domain Name System (DNS) server address information;
common Extended DNS (EDNS) client subnet option indication information; or
common DNAI information.

24. The information processing method according to claim 23, wherein the handling rule further indicates: valid time information of the handling rule itself.

25. An information processing method performed by a first device, comprising:
receiving information on dynamic group sent by an Application Function (AF) device;
obtaining Policy and Charging Control (PCC) policy information based on the information on dynamic group;
sending the PCC policy information to a Session Management Function (SMF) device;
wherein the first device is a Policy Control Function (PCF) device or a Network Exposure Function (NEF) device;
the information on dynamic group comprises at least one of indication information or grouping information;
the indication information is used to instruct a SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN);
the first dynamic UE group is a UE group determined by the SMF device based on the grouping information;
the PCC policy information comprises at least one of the indication information or the grouping information.

26. The information processing method according to claim 25, wherein the grouping information comprises at least one of the followings:
location information of the UE;
application information associated with the UE;
first time period information; or
group identifier associated with the UE.

27. The information processing method according to claim 25, wherein the handling rule indicates at least one of the followings:
common EAS address set information;
common Domain Name System (DNS) server address information;
common Extended DNS (EDNS) client subnet option indication information; or
common DNAI information.

28. The information processing method according to claim 27, wherein the handling rule further indicates: valid time information of the handling rule itself.

29. An information processing device, wherein the information processing device is a Session Management Function (SMF) device, and comprises a memory, a transceiver, and a processor;
the memory is configured to store a computer program; the transceiver is configured to receive and send data under the control of the processor; the processor is configured to read the computer program in the memory and perform following operations:
determining a first dynamic UE group based on grouping information;
configuring a handling rule for a User Plane Function (UPF) device or an Edge Application Server Discovery Function (EASDF) device based on the first dynamic UE group;
the handling rule is used to instruct each UE in the first dynamic UE group to access at least one of a common Edge Application Server (EAS), a common Data Network Access Identifier (DNAI), or a common Local Data Network (L-DN).

30. The information processing device according to claim 29, wherein the grouping information comprises at least one of the followings:
location information of the UE;
application information associated with the UE;
first time period information; or
group identifier associated with the UE.

31. The information processing device according to claim 29, wherein the handling rule indicate at least one of the followings:
common EAS address set information;
common Domain Name System (DNS) server address information;
common Extended DNS (EDNS) client subnet option indication information; or
common DNAI information.

32. The information processing device according to claim 29, wherein determining the first dynamic UE group based on the grouping information comprises:
determining the grouping information based on grouping trigger information;
determining the first dynamic UE group based on the grouping information.

33. The information processing device according to claim 32, wherein the grouping trigger information comprises at least one of the followings:
local policy information; or
Policy and Charging Control (PCC) policy information provided by a Policy Control Function (PCF) device.

34. The information processing device according to claim 32, wherein the grouping trigger information comprises at least one of: indication information or the grouping information;
wherein the indication information is used to instruct the SMF device to configure the handling rule for the UPF device or the EASDF device based on the first dynamic UE group.

35. The information processing device according to claim 29, wherein configuring the handling rule for the UPF device or the EASDF device based on the first dynamic UE group comprises:
in the case it is determined that the UPF or EAS address corresponding to at least one UE in the first dynamic UE group needs to be replaced, configuring the handling rule for the UPF device or the EASDF device based on the first dynamic UE group.

36. The information processing device according to claim 29, wherein configuring the handling rule for the UPF device or the EASDF device based on the first dynamic UE group comprises:
generating a corresponding DNS message handling rule for the first dynamic UE group;
sending the DNS message handling rule to the EASDF device;
wherein the DNS message handling rule is used to indicate: for at least one UE in the first dynamic UE group, a DNS query message initiated by the at least one UE is sent to a common local DNS server or target indication information is added through the EDNS client subnet option;
the target indication information is used to indicate a target Internet Protocol (IP) range.

37. The information processing device according to claim 36, wherein configuring the handling rule for the UPF device or the EASDF device based on the first dynamic UE group further comprises:
obtaining at least one Fully Qualified Domain Name (FQDN);
updating the first dynamic UE group based on the at least one FQDN;
updating the DNS message handling rule for an updated first dynamic UE group;
sending an updated DNS message handling rule to the EASDF device.

38. The information processing device according to claim 29 or 31, wherein configuring the handling rule for the UPF device or the EASDF device based on the first dynamic UE group comprises:
configuring the handling rule for the UPF device or the EASDF device based on first information of at least one UE in the first dynamic UE group;
wherein the first information comprises at least one of the followings:
EAS information; or
Protocol Data Unit (PDU) session information.

39. The information processing device according to claim 31, wherein the handling rule further indicates: valid time information of the handling rule itself.

40. The information processing device according to claim 29 or 31, wherein the operations of the information processing device further comprise:
after configuring the handling rule for the UPF device or the EASDF device based on the first dynamic UE group, performing at least one of the following operations based on the handling rule:
performing selection and/or insertion of at least one of an Uplink Classifier (UL CL) or Branching Point (BP), or a PDU session anchor UPF; or
determining a DNS server.

41. The information processing device according to claim 29 or 31, wherein the operation of the information processing device further comprises:
after configuring the handling rule for the UPF device or the EASDF device based on the first dynamic UE group, configuring a traffic routing rule to the UL CL or BP based on the handling rule;
wherein the traffic routing rule indicates that the UL CL is configured with common DNS server address, or the BP is configured with a same IP address prefix.

42. An information processing device, the information processing device is an Edge Application Server Discovery Function (EASDF) device, comprising a memory, a transceiver, and a processor;
the memory is configured to store a computer program; the transceiver is configured to receive and send data under the control of the processor; the processor is configured to read the computer program in the memory and perform following operations:
receiving a handling rule sent by a Session Management Function(SMF) device through the transceiver;
processing a Domain Name System (DNS) query message based on the handling rule;
wherein the handling rule is used to instruct each UE in the first dynamic UE group to access at least one of a common Edge Application Server (EAS), a common Data Network Access Identifier (DNAI), or a common Local Data Network (L-DN);
the handling rule is a rule configured for a User Plane Function (UPF) device or an EASDF device;
the first dynamic UE group is a UE group determined by the SMF device based on grouping information.

43. The information processing device according to claim 42, wherein the grouping information comprises at least one of the followings:
location information of the UE;
application information associated with the UE;
first time period information; or
group identifier associated with the UE.

44. The information processing device according to claim 42, wherein receiving the handling rule sent by the SMF device comprises:
receiving a DNS message handling rule sent by the SMF device;
wherein the DNS message handling rule is used to indicate: for at least one UE in the first dynamic UE group, a DNS query message initiated by the at least one UE is sent to a common local DNS server or target indication information is added through an Extended DNS (EDNS) client subnet option;
the target indication information is used to indicate a target Internet Protocol (IP) range.

45. The information processing device according to claim 42, wherein receiving the handling rule sent by the SMF device further comprises:
receiving an updated DNS message handling rule sent by the SMF device.

46. The information processing device according to claim 42, wherein the handling rule indicates at least one of the followings:
common EAS address set information;
common DNS server address information;
common EDNS client subnet option indication information; or
common DNAI information.

47. The information processing device according to claim 46, wherein the operations of the information processing device further comprise:
after receiving the handling rule sent by the SMF device, determining valid time of the handling rule;
when the handling rule is within the valid time, sending EAS information to at least one UE in the first dynamic UE group through the transceiver based on the handling rule;
when the handling rule exceeds the valid time, sending a DNS query message corresponding to at least one UE in the first dynamic UE group to the DNS server through the transceiver;
receiving the EAS information fed back by the DNS server through the transceiver and sending it to at least one UE in the first dynamic UE group.

48. The information processing device according to claim 47, wherein determining the valid time of the handling rule comprises:
determining the valid time of the handling rule based on local policy configuration or valid time information carried by the handling rule.

49. An information processing device, the information processing device is an Application Function (AF) device, comprising a memory, a transceiver, and a processor;
the memory is configured to store a computer program; the transceiver is configured to receive and send data under the control of the processor; the processor is configured to read the computer program in the memory and perform the following operations:
sending information on dynamic group to a first device through the transceiver, wherein the first device is a Policy Control Function (PCF) device or a Network Exposure Function (NEF) device;
the information on dynamic group comprises at least one of indication information or grouping information;
the indication information is used to instruct a Session Management Function (SMF) device to configure a handling rule for a User Plane Function (UPF) device or an Edge Application Server Discovery Function (EASDF) device based on a first dynamic UE group; the handling rule is used to instruct each UE in the first dynamic UE group to access at least one of a common Edge Application Server (EAS), a common Data Network Access Identifier (DNAI), or a common Local Data Network (L-DN);
the first dynamic UE group is a UE group determined by the SMF device based on grouping information.

50. The information processing device according to claim 49, wherein the grouping information comprises at least one of the followings:
location information of the UE;
application information associated with the UE;
first time period information; or
group identifier associated with the UE.

51. The information processing device according to claim 49, wherein the handling rule indicates at least one of the followings:
common EAS address set information;
common Domain Name System (DNS) server address information;
common Extended DNS (EDNS) client subnet option indication information; or
common DNAI information.

52. The information processing device according to claim 51, wherein the handling rule further indicates: valid time information of the handling rule itself.

53. An information processing device, the information processing device is a first device, comprising a memory, a transceiver, and a processor;
the memory is configured to store a computer program; the transceiver is configured to receive and send data under the control of the processor; the processor is configured to read the computer program in the memory and perform following operations:
receiving information on dynamic group sent by an Application Function (AF) device through the transceiver;
obtaining Policy and Charging Control (PCC) policy information based on the information on dynamic group;
sending the PCC policy information to a Session Management Function (SMF) device through the transceiver;
wherein the first device is a Policy Control Function (PCF) device or a Network Exposure Function (NEF) device;
the information on dynamic group comprises at least one of indication information or grouping information;
the indication information is used to instruct a SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN);
the first dynamic UE group is a UE group determined by the Session Management Function (SMF) device based on the grouping information;
the PCC policy information comprises at least one of the indication information or the grouping information.

54. The information processing device according to claim 53, wherein the grouping information comprises at least one of the followings:
location information of the UE;
application information associated with the UE;
first time period information; or
group identifier associated with the UE.

55. The information processing device according to claim 53, wherein the handling rule indicates at least one of the followings:
common EAS address set information;
common Domain Name System (DNS) server address information;
common Extended DNS (EDNS) client subnet option indication information; or
common DNAI information.

56. The information processing device according to claim 55, wherein the handling rule further indicates: valid time information of the handling rule itself.

57. An information processing apparatus applied to a Session Management Function (SMF) device, comprising:
a first determination unit, configured to determine a first dynamic UE group based on grouping information;
a first configuration unit, configured to configure a handling rule for a User Plane Function (UPF) device or an Edge Application Server Discovery Function (EASDF) device based on the first dynamic UE group;
wherein the handling rule is used to instruct each UE in the first dynamic UE group to access at least one of a common Edge Application Server (EAS), a common Data Network Access Identifier (DNAI), or a common Local Data Network (L-DN).

58. An information processing apparatus applied to an Edge Application Server Discovery Function (EASDF) device, comprising:
a first receiving unit, configured to receive a handling rule sent by a Session Management Function (SMF) device;
a first processing unit, configured to process a Domain Name System (DNS) query message based on the handling rule;
wherein the handling rule is used to instruct each UE in the first dynamic UE group to access at least one of a common Edge Application Server (EAS), a common Data Network Access Identifier (DNAI), or a common Local Data Network (L-DN);
the handling rule is a rule configured for a User Plane Function (UPF) device or the EASDF device;
the first dynamic UE group is a UE group determined by the SMF device based on grouping information.

59. An information processing apparatus applied to an Application Function (AF) device, comprising:
a third sending unit, configured to send information on dynamic group to a first device, wherein the first device is a Policy Control Function (PCF) device or a Network Exposure Function (NEF) device;
wherein the information on dynamic group comprises at least one of indication information or grouping information;
the indication information is used to instruct a Session Management Function (SMF) device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN);
the first dynamic UE group is a UE group determined by the SMF device based on the grouping information.

60. An information processing apparatus applied to a first device, comprising:
a second receiving unit, configured to receive information on dynamic group sent by Application Function (AF) device;
a second processing unit, configured to obtain Policy and Charging Control (PCC) policy information based on the information on dynamic group;
a fourth sending unit, configured to send the PCC policy information to a Session Management Function (SMF) device;
wherein the first device is a Policy Control Function (PCF) device or a Network Exposure Function (NEF) device;
the information on dynamic group comprises at least one of indication information or grouping information;
the indication information is used to instruct the SMF device to configure a handling rule for a User Plane Function (UPF) device or an Edge Application Server Discovery Function (EASDF) device based on the first dynamic UE group; the handling rule is used to instruct each UE in the first dynamic UE group to access at least one of a common Edge Application Server (EAS), a common Data Network Access Identifier (DNAI), or a common Local Data Network (L-DN);
the first dynamic UE group is a UE group determined by the SMF device based on the grouping information;
the PCC policy information comprises at least one of the indication information or the grouping information.

61. A processor-readable storage medium storing a computer program, wherein the computer program is used to cause a processor to implement the information processing method according to any one of claims 1 to 13, or
the computer program is used to cause the processor to implement the information processing method according to any one of claims 14 to 20; or
the computer program is used to cause the processor to implement the steps of the information processing method according to any one of claims 21 to 24; or
the computer program is used to cause the processor to implement the steps of the information processing method according to any one of claims 25 to 28.
